# EUROPEAN PATENT SPECIFICATION

(11) **EP 1 788 476 B1**
(45) Date of publication and mention of the grant of the patent: **05.05.2010**
(21) Application number: 06022730.3
(22) Date of filing: 31.10.2006
(51) Int. Cl.: G06F 3/048, G06F 17/27, B41J 3/46

(54) **Document processing apparatus**
Dokumentsverarbeitungsvorrichtung
Appareil de traitement de documents

(30) Priority: 16.11.2005 JP 2005331016
(43) Date of publication of application: 23.05.2007
(73) Proprietor: Brother Kogyo Kabushiki Kaisha, Nagoya-shi, Aichi-ken 467-8561 (JP)
(72) Inventor: Suzuki, Yasunori Intel. Prop. Dept., Nagoya-shi Aichi-ken, 467-8562 (JP); Iida, Yuji Intel. Prop. Dept., Nagoya-shi Aichi-ken, 467-8562 (JP); Tanjima, Naoki Intel. Prop. Dept., Nagoya-shi Aichi-ken, 467-8562 (JP)
(74) Representative: Hofer, Dorothea

(56) References cited:
- EP-A1- 0 743 605
- EP-A2- 0 707 258

## Description

### CROSS-REFERENCE TO RELATED APPLICATIONS

This application claims priority from JP 2005-331016, filed November 16, 2005, the contents of which are hereby incorporated by reference.

### BACKGROUND OF THE INVENTION

### 1. Field of the Invention

The present invention relates to a document processing apparatus, and more particularly to a positioning method of a cursor when changing over a display screen.

### 2. Description of the Related Art

Japanese Patent Application Laid-open No. H1 (1989)-85050 discloses, for example, a document processing apparatus comprising a keyboard, a display unit, and a printing mechanism, and capable of printing characters and symbols on a tape as a printing medium (the tape width variable in 6, 9, 12, 18, 24 mm), and a document processing apparatus for printing on a tape label to be adhered to the spine of a file is developed, and various editing functions are proposed to be added to the document processing apparatus.

In the document processing apparatus, tape width can be changed by exchanging the tape cassette, and the characters are printed in a character size suited to the tape width.

Recently, in a specific display mode, a document processing apparatus includes a display screen showing a print image same as characters printed on a tape. In a conventional document processing apparatus, however, since the display size of characters shown in the display screen is not changed, when printing in plural lines, the character size on the display screen becomes too small to be seen, and convenience of use is not sufficient.

Accordingly, a new document processing apparatus is proposed in Japanese Patent Application Laid-open No. H9 (1997)-44483, in which magnifying range specifying device for specifying a magnifying range is provided for magnifying, characters displayed as required in order to enhance convenience of use, and when the cursor is positioned in the middle of a line specified by the magnifying range specifying device, the cursor is moved to the center of the display when changing the display screen, or when the cursor is positioned at the beginning of a line specified by the magnifying range specifying device, the cursor is moved to the left end of the display when changing the display screen.

By this magnifying range specifying device, the technology of improving the convenience of use by magnifying and displaying characters as required is a very effective technology from the viewpoint of improving the visibility.

However, when changing over the display screen, the technology for moving the cursor positioned in the middle of a line to the center of the display or the technology for moving the cursor positioned at the beginning of a line to the left end of display screen is an automatic operation for determining the display position regardless of the flow of operations. The user may lose sight of the cursor by an accidental move of the cursor, or may perform operation feeling uncomfortable or stressed.

Document EP 0 743 605 A1 discloses a type writer comprising a display screen providing a zooming function. The type writer comprises a keyboard for inputting characters in various commands, and a display unit for displaying character data. The type writer comprises a key for enlarging the data currently displayed. When the enlargement key is pressed, a single line of text is presented on the display screen in the display range of the type writer is set so that the cursor is positioned in the centre of the display.

Document EP 070 258 A2 discloses a mouse driver arrangement comprising a functional block comprising a cursor trail analyzer for detecting a dominant direction in a cursor trail and setting a scroll direction option accordingly. For this, a plurality of successive cursor positions are stored in a shift register and a scrolling heading is derived based on calculation of parameters from the contents of this shift register.

### SUMMARY OF THE INVENTION

The invention is conceived to solve these problems, and it is hence an object thereof to present a document processing apparatus capable of storing an input history of character data and command data being inputted with an input device, and expressing the cursor at an optimum position by analyzing the input frequency when changing the display screen, so that the user can perform operation without feeling uncomfortable or stressed.

To achieve the purpose of the invention, there is provided a document processing apparatus comprising: an input device that is used for inputting character data and various kinds of command data; a display unit that has a display screen to display the character data on the display screen; a size setting device that sets a magnified and reduced display size of the character data shown in the display unit; a range specifying device that specifies a display range of the character data; a cursor that indicates an input position at which one of the character data and the command data is inputted with the input device on the display screen of the display unit; a history storing device that stores an input history of the character data and the command data being inputted with the input device; an analyzing device that analyzes the input history of the character data and the command data being inputted to the history storing device; and a display control device that displays the cursor at a specified position that is determined by analytical results of the input history of the data being analyzed in the analyzing device, the input history of the data being inputted to the history storing device, when a change of the display screen of the display unit is performed by the size setting device, and further displays the display range of the character data, which is changed in the range specifying device in consequence of displaying the cursor at the specified position.

The document processing apparatus of the invention comprises a document processing apparatus comprising: an input device that is used for inputting character data and various kinds of command data; a display unit that has a display screen to display the character data on the display screen; a size setting device that sets a magnified and reduced display size of the character data shown in the display unit; a range specifying device that specifies a display range of the character data; a cursor that indicates an input position at which one of the character data and the command data is inputted with the input device on the display screen of the display unit; a history storing device that stores an input history of the character data and the command data being inputted with the input device; an analyzing device that analyzes the input history of the character data and the command data being inputted to the history storing device; and a display control device that displays the cursor at a specified position that is determined by analytical results of the input history of the data being analyzed in the analyzing device, the input history of the data being inputted to the history storing device, when a change of the display screen of the display unit is performed by the size setting device, and further displays the display range of the character data, which is changed in the range specifying device in consequence of displaying the cursor at the specified position. Therefore, the flow of operations by the user can be shown by the history storing device, and the flow of operations is analyzed by the analyzing device. When the display range is changed by the size setting device, the cursor position on the display can be moved to an optimum position by predicting the operation by the user. As a result, if the display screen is changed by the size setting device, the user can continue an editing operation without losing sight of the cursor or feeling uncomfortable. Therefore, the user can easily recognize the content of editing. The workload by editing can be lessened for the user. Using these devices prevent the user from feeling uncomfortable in the operation, so that a display unit of a relatively small size can be adopted, which contributes greatly to reduction of the cost.

Further developments of the present invention are given in the dependent claims.

### BRIEF DESCRIPTION OF THE DRAWINGS

FIG. 1 is a perspective view of a document processing apparatus in a first embodiment;
FIG. 2 is a schematic plan view of a printing mechanism on which a tape cassette is mounted;
FIG. 3 is a block diagram of a control system of the document processing apparatus;
FIG. 4 is a flowchart of main routine of a tape printing control;
FIG. 5 is a flowchart of a character size setting process;
FIG. 6 is a flowchart of a print image display process;
FIG. 7 is a flowchart of the print image display process;
FIG. 8 is a flowchart of the print image display process;
FIG. 9 is a flowchart of the print image display process;
FIG. 10 is an explanatory diagram of an example of a display (standard display) when a power key is turned on;
FIG. 11 is an explanatory diagram of a character size setting screen;
FIG. 12 is an explanatory diagram of a display example of characters inputted in a liquid crystal display during the standard display;
FIG. 13 is an explanatory diagram of an example of the characters editing during the standard display;
FIG. 14 is an explanatory diagram of a display example in the liquid crystal display when changing from the standard display to a magnified display, during a character input operation, a character backward delete operation, and a cursor left move operation;
FIG. 15 is an explanatory diagram of a display example in the liquid crystal display when changing from the standard display to the magnified display, during the character forward delete operation, and the cursor right move operation;
FIG. 16 is an explanatory diagram of a display example in the liquid crystal display when changing from the standard display to the magnified display, during the cursor up move operation;
FIG. 17 is an explanatory diagram of a display example in the liquid crystal display when changing from the standard display to the magnified display, during cursor down move operation;
FIG. 18 is an explanatory diagram of a display example in the liquid crystal display when changing from the magnified display to the standard display, during the character input operation, the character backward delete operation, and the cursor left move operation;
FIG. 19 is an explanatory diagram of a display example in the liquid crystal display when changing from the magnified display to the standard display, during the character forward delete operation, and the cursor right move operation;
FIG. 20 is an explanatory diagram of a display example in the liquid crystal display when changing from the magnified display to the standard display, during the cursor up move operation;
FIG. 21 is an explanatory diagram of a display example in the liquid crystal display when changing from the magnified display to the standard display, during the cursor down move operation;
FIG. 22 is an explanatory diagram of text memory storing a plurality of information formats and character string codes;
FIG. 23 is an explanatory diagram of layout position information;
FIG. 24 is an explanatory diagram of a character size conversion table setting a relation of a print character size and a display character size;
FIG. 25 is a table showing character sizes of a character font stored in a CGROM;
FIG. 26 is an explanatory diagram of a display example of a display range in the magnified display of a character string stored in a text memory;
FIG. 27 is an explanatory diagram of a display example of the display range in the magnified display of the character string stored in the text memory;
FIG. 28 is a flowchart of a print image display process in a magnified three-character display in a second embodiment;
FIG. 29 is an explanatory diagram of a display example in the liquid crystal display when changing from the standard display to the magnified display, during the character input operation, the character backward delete operation, the cursor left move operation, and the cursor down move operation in the magnified three-character display;
FIG. 30 is an explanatory diagram of a display example in the liquid crystal display when changing from the standard display to the magnified display, during the character forward delete operation, and the cursor right move operation in the magnified three-character display; and
FIG. 31 is an explanatory diagram of a display example in the liquid crystal display when changing from the standard display to the magnified display, during the cursor up move operation in the magnified three-character display.

### DETAILED DESCRIPTION OF THE PREFERRED EMBODIMENTS

A first embodiment for carrying out the invention will be specifically described below with reference to the drawings.

This embodiment is an example of the invention applied in a document processing apparatus capable of printing various characters, such as alphabets, numerals and symbols on a print tape.

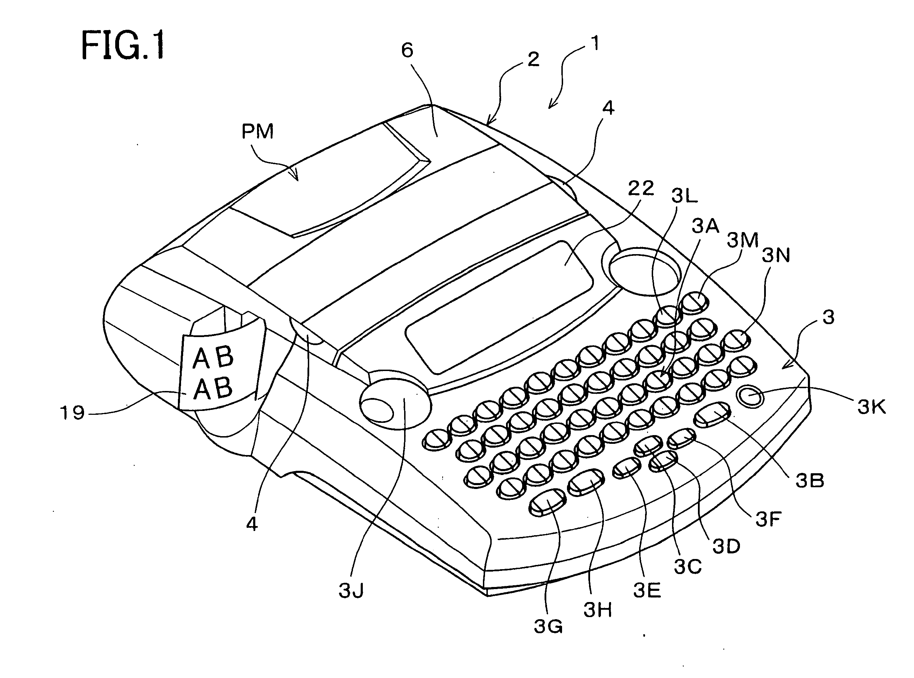

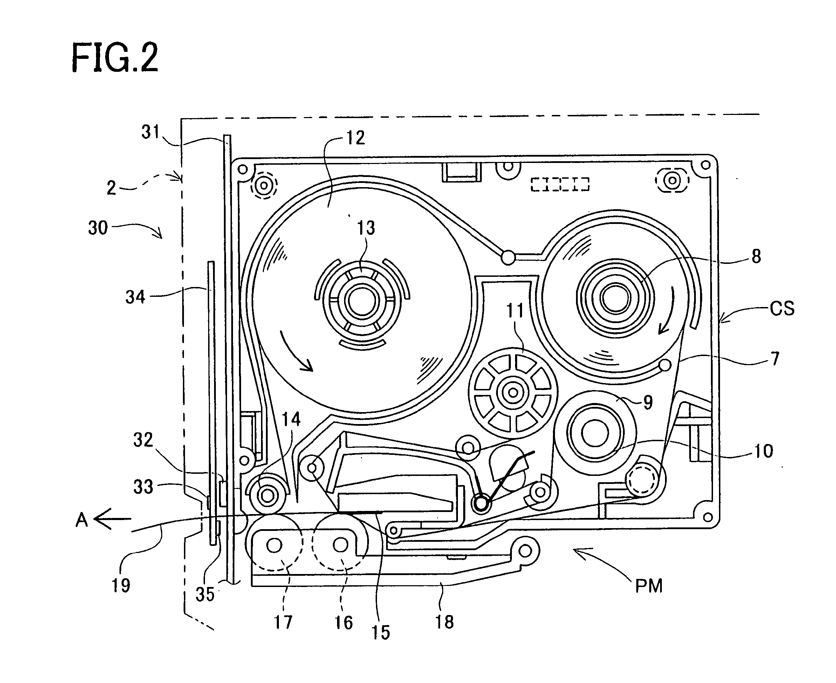

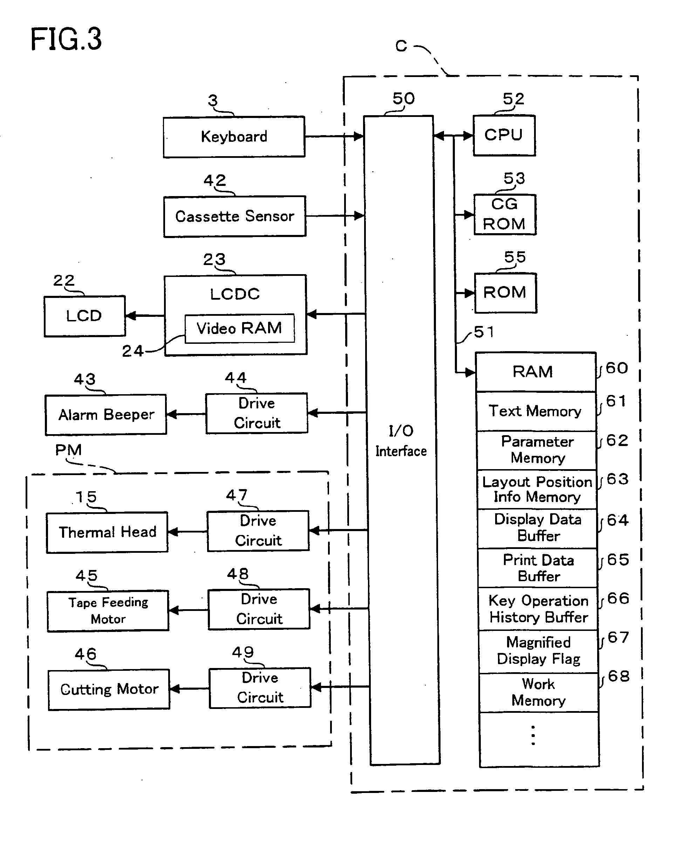

A schematic structure of a document processing apparatus 1 will be explained with reference to FIG. 1 to FIG. 3, and FIG. 25. FIG. 1 is a perspective view of the document processing apparatus in the first embodiment, FIG. 2 is a schematic plan view of a printing mechanism on which a tape cassette is mounted, and FIG. 3 is a block diagram of a control system of the document processing apparatus.

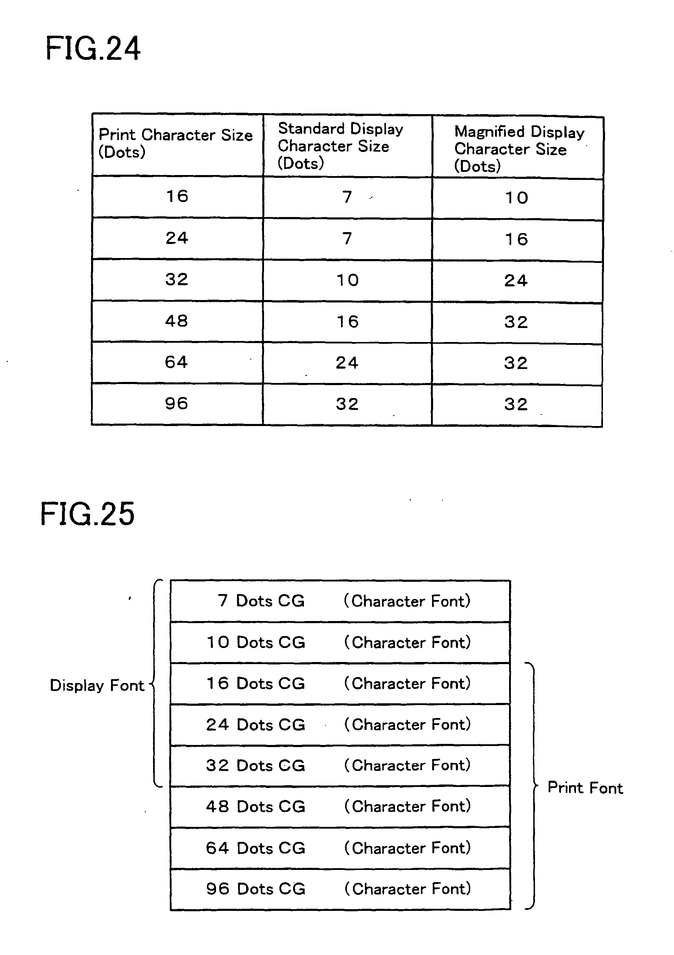

FIG. 25 is a table showing character sizes of the character font stored in a CGROM. The character sizes of the character font stored in the CGROM are eight types of sizes, 7, 10, 16, 24, 32, 48, 64, and 96 (dots CG). The sizes 7 to 32 (dots CG) are for display fonts, and the sizes 16 to 96 (dots CG) are for print fonts.

As shown in FIG. 1, a keyboard 3 is disposed in a front part of a main body frame 2 of the document processing apparatus 1, and a print mechanism PM is disposed in the main body frame 2 behind the keyboard 3, and a liquid crystal display unit 22 for displaying characters and symbols being inputted in the print image is disposed immediately behind the keyboard 3. The liquid crystal display unit 22 has a display screen which offers a matrix size required in the embodiment. A release projection 4 is an opening protrusion for opening a cover frame 6 when installing or uninstalling a tape cassette CS to be mounted on the print mechanism PM.

The keyboard 3 has character keys 3A for inputting alphabets, numerals and symbols, a space key 3B, a cursor up move key 3C, a cursor down move key 3D, a cursor left move key 3E and a cursor right move key 3F for moving a cursor K in up, down, left and right directions, a magnified display key 3G, a size setting key 3H for changing and setting format information including character decoration, a display character size and a print character size, a print key 3J for commanding print, a power key 3K for turning on and off the power supply, a delete key 3L for deleting a character forward, a backspace key 3M for deleting a character backward, and an execution key 3N for executing various setting processes.

The print mechanism PM will be briefly described in FIG. 2, in which this print mechanism PM has the detachable rectangular tape cassette CS, and this tape cassette CS includes a tape spool 8 on which a laminate film tape 7 is wound, an ink ribbon supply spool 10 on which an ink ribbon 9 is wound, an ink ribbon take-up spool 11 for taking up the ink ribbon 9, a supply spool 13 on which a double-sided adhesive tape 12 having the same width as the laminate film tape 7 wound with a release paper at outside, and a press roller 14 for bonding the laminate film tape 7 and the double-sided adhesive tape 12 together, which are all provided rotatably.

At the overlap position of the laminate film tape 7 and the ink ribbon 9, a thermal head 15 is set up, and a platen roller 16 for pressing the laminate film tape 7 and the ink ribbon 9 to the thermal head 15, and a feed roller 17 for preparing a printed tape 19 by pressing the laminate film tape 7 and the double-sided adhesive tape 12 against the press roller 14 are rotatably supported on a roller holder 18 rotatably pivoted on the main body frame 2. A heating element group consisting of 128 heating elements is arrayed on the thermal head 15 in the vertical direction.

Therefore, by driving of a tape feeding motor 45 (see FIG. 3) in the predetermined rotating direction, the press roller 14 and the ink ribbon take-up spool 11 are synchronously driven in the predetermined rotating direction. When power is supplied to the heating element group of the thermal head 15, characters and barcodes consisting of a plurality of dot rows are printed on the laminate film tape 7. The laminate film tape 7 is fed in a tape feed direction A as the printed tape 19 in bonded state with the double-sided adhesive tape 12, and is discharged out of the main body frame 2 as shown in FIG. 1 and FIG. 2. Details of the print mechanism PM will be explained in Japanese Patent Application Laid-open No. H2-106555.

A tape cutter 30 for automatically cutting the printed tape 19 will be described briefly in FIG. 2, in which a flat supplemental frame 31 is set up immediately inside the main body frame 2 opposite to the left side of the tape cassette CS. A fixed blade 32 is affixed upward in the supplemental frame 31. A pivotally supporting axis 33 in the lateral direction affixed on the supplemental frame 31 rotatably supports near the front end of an operation lever 34 extended in the longitudinal direction. A movable blade 35 is provided oppositely to the fixed blade 32, at the position of the operation lever 34 opposite to the front side of the pivotally supporting axis 33. The rear end of the operation lever 34 can be swung vertically by means of a swinging driving mechanism (not shown) coupled to a cutting motor 46 (see FIG. 3), and usually the movable blade 35 is held apart from the fixed blade 32.

The printed tape 19 printed with the thermal head 15 is guided from the tape cassette CS to the outside of the main body frame 2 through the gap between the fixed blade 32 and the movable blade 35, and by the cutting motor 46 driven by a cutting signal, the rear end of the operation lever 34 is swung vertically through the swinging drive mechanism, and the movable blade 35 comes closer to the fixed blade 32, and the printed tape 19 is cut by these two blades 32 and 35.

A control system of the document processing apparatus 1 will be explained in Fig. 3.

An input and output (I/O) interface 50 of a control device C is connected to various units including a keyboard 3, a cassette sensor 42, a display controller (a LCDC) 23 having a video RAM 24 for outputting display data to the liquid crystal display (the LCD) 22, a drive circuit 44 for an alarm beeper 43, a drive circuit 47 for driving the thermal head 15, a drive circuit 48 for driving the tape feeding motor 45, and a drive circuit 49 for driving the cutting motor 46.

The control device C includes a CPU 52, the I/O interface 50 connected to the CPU 52 through a bus 51 such as a data bus, the CGROM (a character generator ROM) 53, a ROM 55, a RAM 60, and others.

The CGROM 53 stores dot pattern data for displaying and printing, as character font data, relating to each one of multiple characters including alphabets, numerals and symbols, in relation to the code data for the portion of eight sizes (7, 10, 16, 24, 32, 48, 64, 96 dots) in each font type (Gothic font, Mincho font and others) as shown in Fig. 25.

The ROM 55 preliminarily stores a control program of the tape print control for displaying the characters being inputted with the keyboard 3 in the liquid crystal display 22 and printing on the tape, a print drive control program for sequentially reading out the data of a print data buffer 65, and driving the thermal head 15 and the tape feeding motor 45, and the character size conversion table (see Fig. 24) setting the relation of the print character size and the display character size.

Relating to the RAM 60, document data being inputted with the keyboard 3 is stored in a text memory 61. A parameter memory 62 stores a pointer value SP of a starting address pointer indicating the starting address of the text memory 61, an end address pointer value EP indicating the end address, a data count value DC, and other data. A print layout position information memory 63 stores the print position information in a display data buffer 64 of characters and symbols to be displayed.

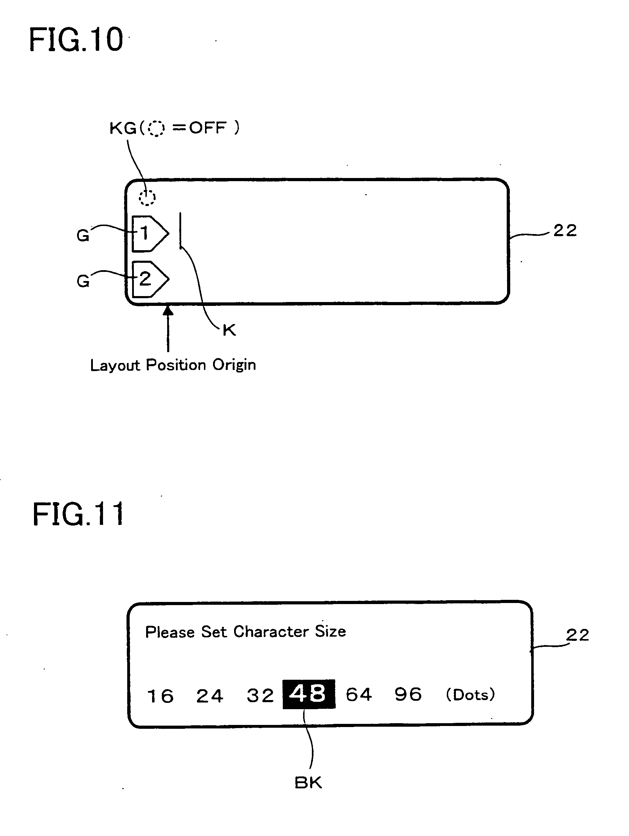

The display data buffer 64 stores display dot image data synthesizing display dot pattern data of characters and symbols being inputted, and a print data buffer 65 stores the print dot image data synthesizing the print dot pattern data corresponding to characters and symbols to be printed. A key operation history buffer 66 stores a key operation history obtained by the operation of the keyboard 3 in the sequence of a key operation. When the key operation history exceeds a predetermined number (five in this embodiment), the oldest history is deleted. A magnified display flag 67 judges a standard display or a magnified display, and the flag status OFF showing the standard display at the time of initializing is stored. Every time the display size setting key is pressed, the status of the magnified display flag 67 is inverted, and the flag status is stored. When the magnified display flag 67 is ON, a magnified display guidance KG (see FIG. 10) of the liquid crystal display (the LCD) 22 is turned on so as to tell the user that the present display is the magnified display. The RAM 60 also includes a work memory 68.

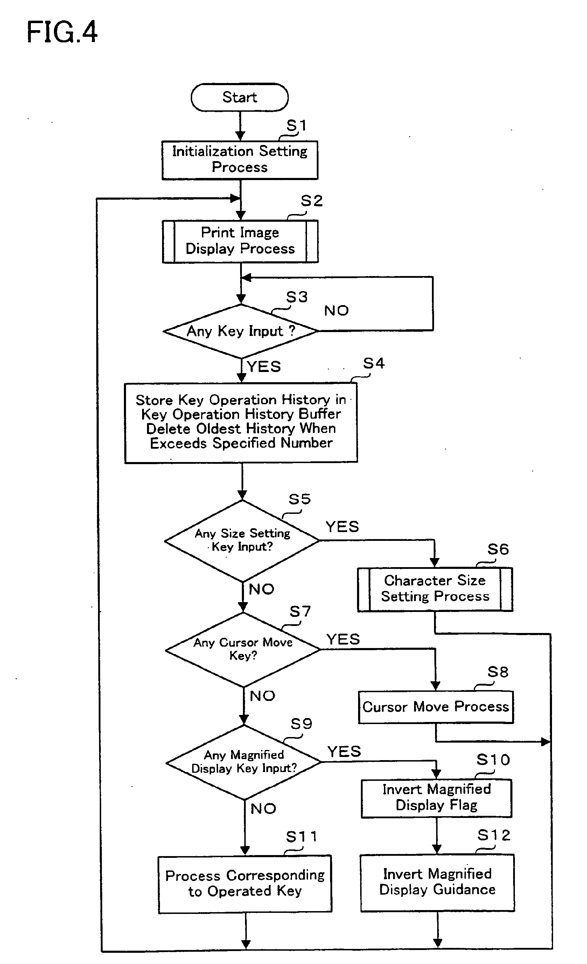

Operations of the document processing apparatus 1 will be explained with reference to the flowcharts in FIG. 4 to FIG. 9, and the diagrams in FIG. 10 to FIG. 27. In the diagrams, Si refers to a step of operations (i = 1, 2, 3...).

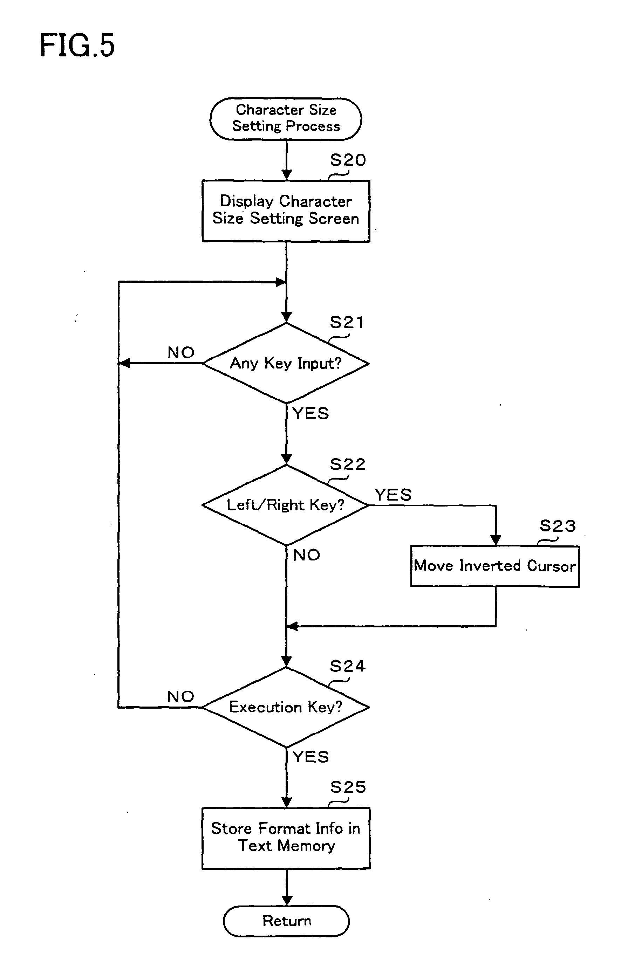

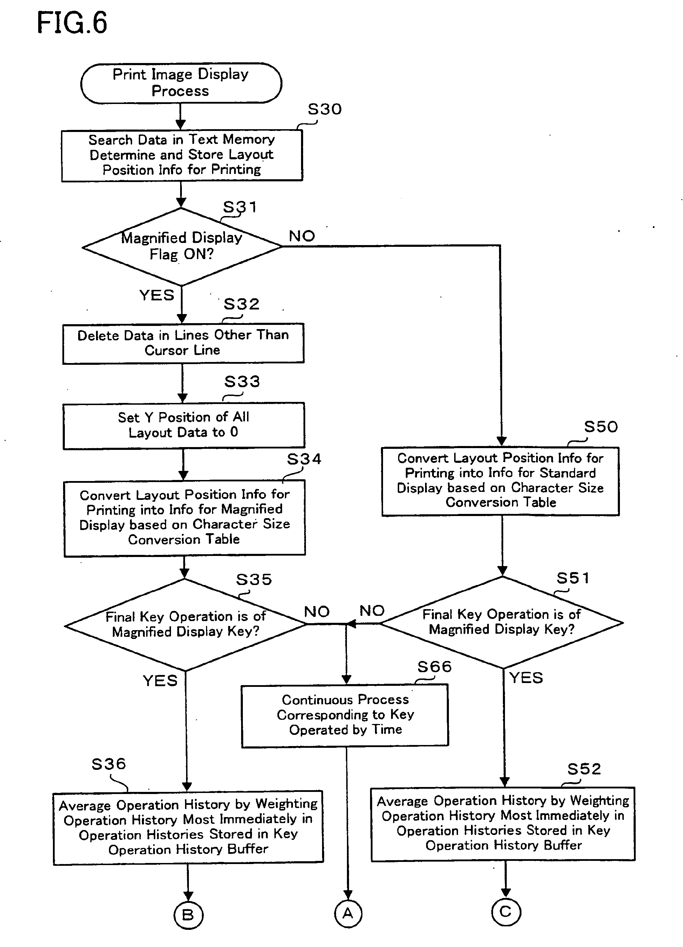

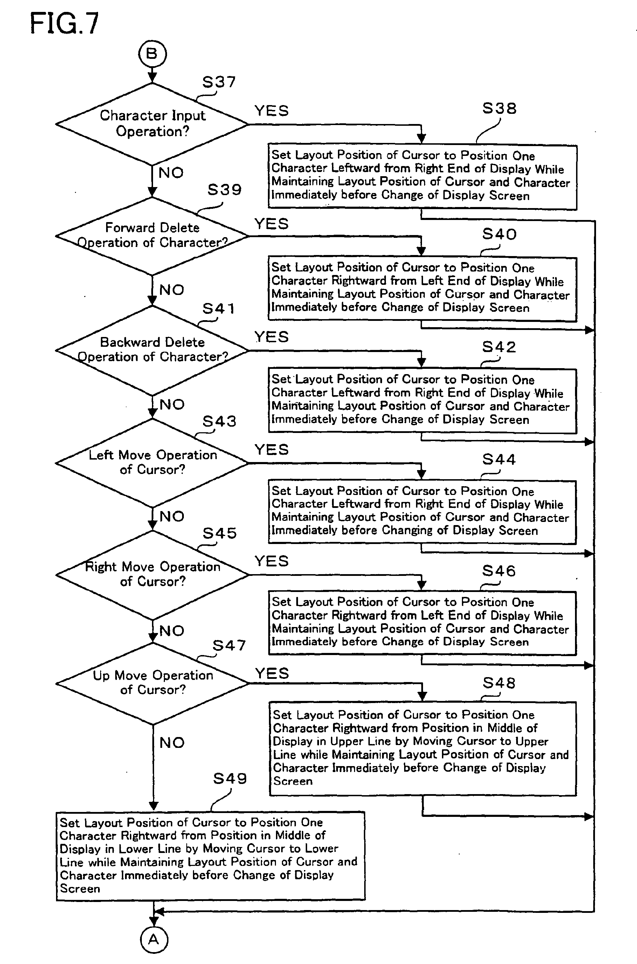

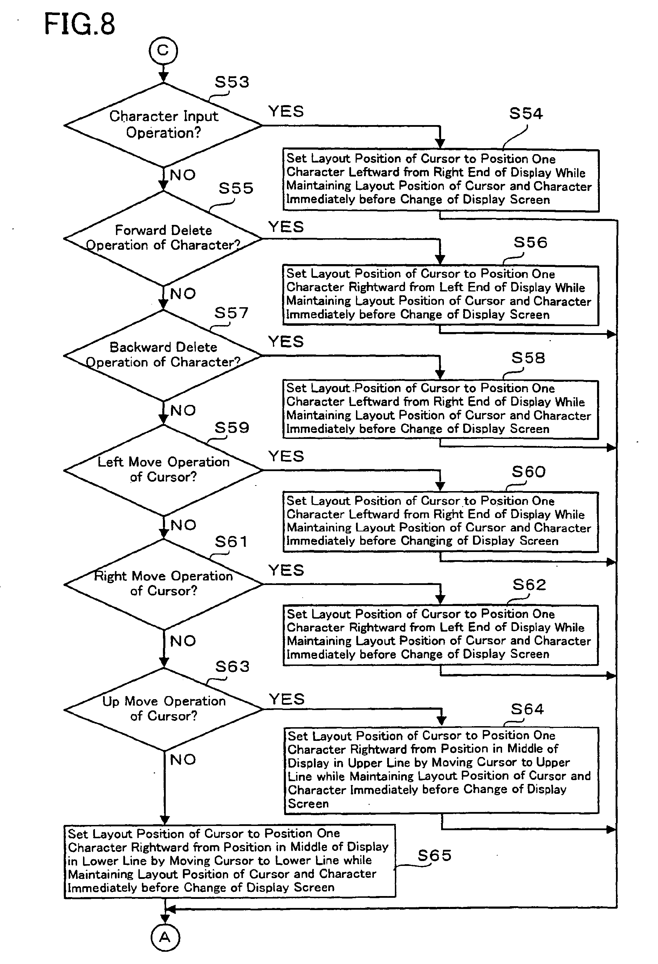

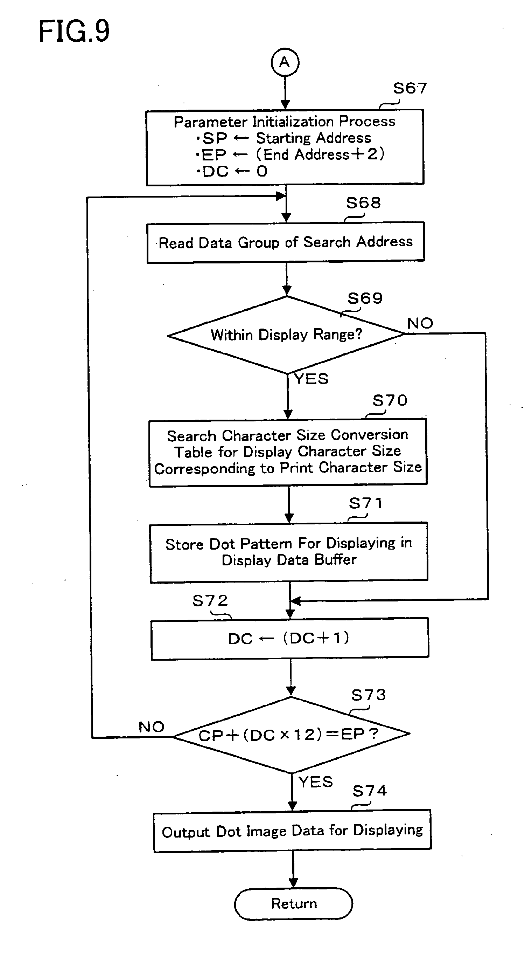

FIG. 4 is a flowchart of main routine of a tape printing control, FIG. 5 is a flowchart of a character size setting process, FIG. 6 is a flowchart of a print image display process, FIG. 7 is a flowchart of the print image display process, FIG. 8 is a flowchart of the print image display process, and FIG. 9 is a flowchart of the print image display process.

FIG. 10 is an explanatory diagram of an example of a display (standard display) when the power key 3K is pressed. The magnified display guidance KG is off and is not lit. A line number sign G shows 1 and 2, and the vertical cursor K is shown at the right side of the display of 1. The immediately right side of the line number sign G is the layout position origin.

FIG. 11 is an explanatory diagram of a character size setting screen. The liquid crystal display 22 shows "Please Set Character Size." Character sizes of 16, 24, 32, 48, 64, and 96 (dots) are displayed, and a block cursor BK is shown in overlapping with a character size 48 (dots).

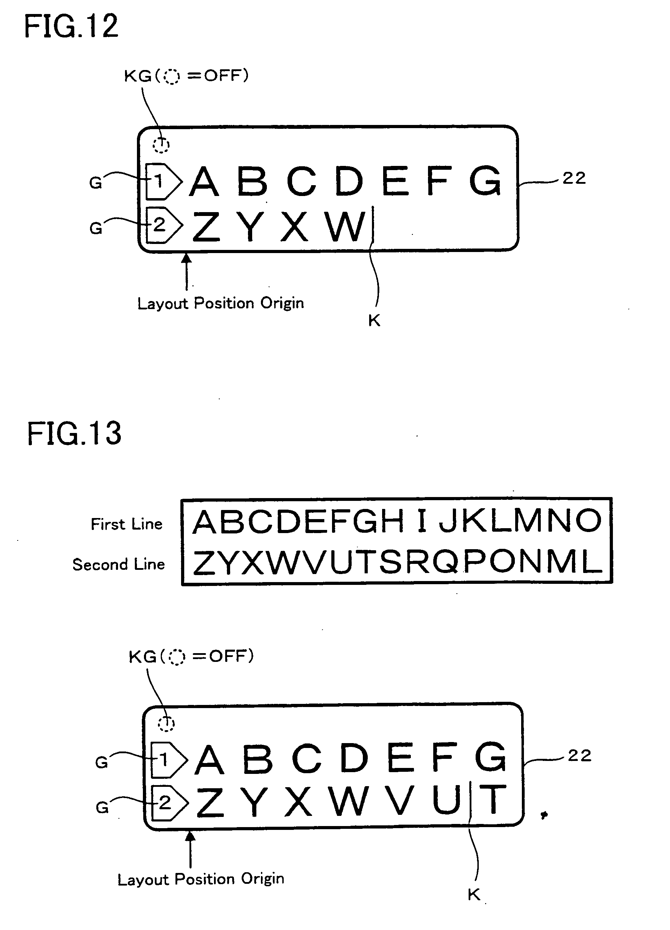

FIG. 12 is an explanatory diagram of a display example of a character being inputted in the liquid crystal display during the standard display. The magnified display guidance KG is off and is not lit. The line number sign G shows "ABCDEFG" in the standard display in the line of 1, and shows "ZYXW" in the standard display in line of 2. At the right side of "W", the vertical cursor K is shown.

FIG. 13 is an explanatory diagram of an example of character editing during the standard display. The upper diagram is a character string for character editing being inputted with the keyboard 3 for preparing the printed tape 19, and "ABCDEFGHIJKLMNO" is inputted in the first line, and "ZYXWVUTSRQPONML" is inputted in the second line. The lower diagram shows the input character string of the upper diagram in the standard display in the liquid crystal display 22. The magnified display guidance KG of the liquid crystal display 22 is off and is not lit. The line number sign G shows "ABCDEFG" during the standard display in the line of 1, and shows "ZYXWVUT" during the standard display in the line of 2. At the right side of "U", the vertical cursor K is shown.

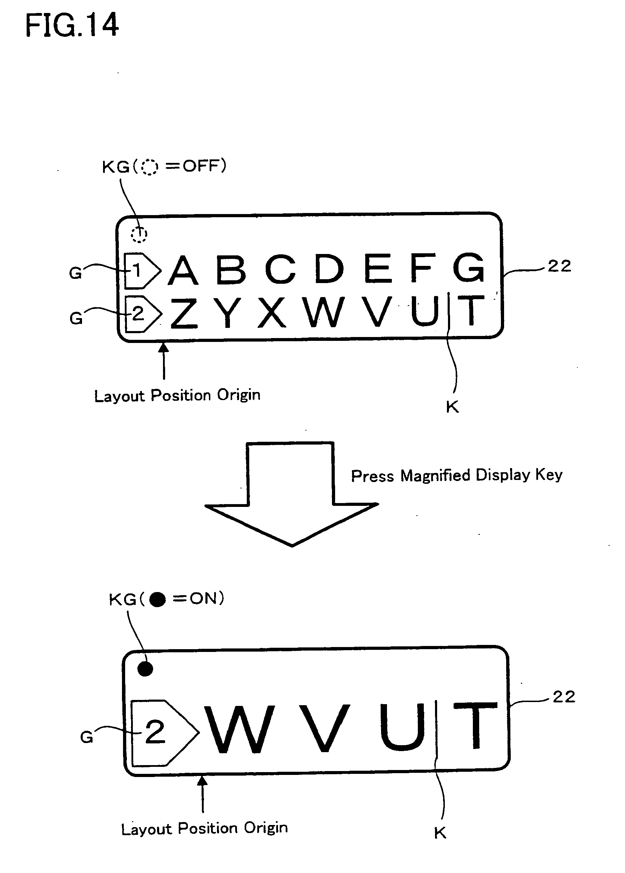

FIG. 14 is an explanatory diagram of a display example in the liquid crystal display when changing from the standard display to the magnified display, during a character input operation, a character backward delete operation, and a cursor left move operation. The upper diagram shows the display status of the standard display in the liquid crystal display 22 during the character input operation, the character backward delete operation, and the cursor K left move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is on and is lit. The line number sign G shows magnified "WVUT" in the line of 2. At the right side of "U", the vertical cursor K is shown.

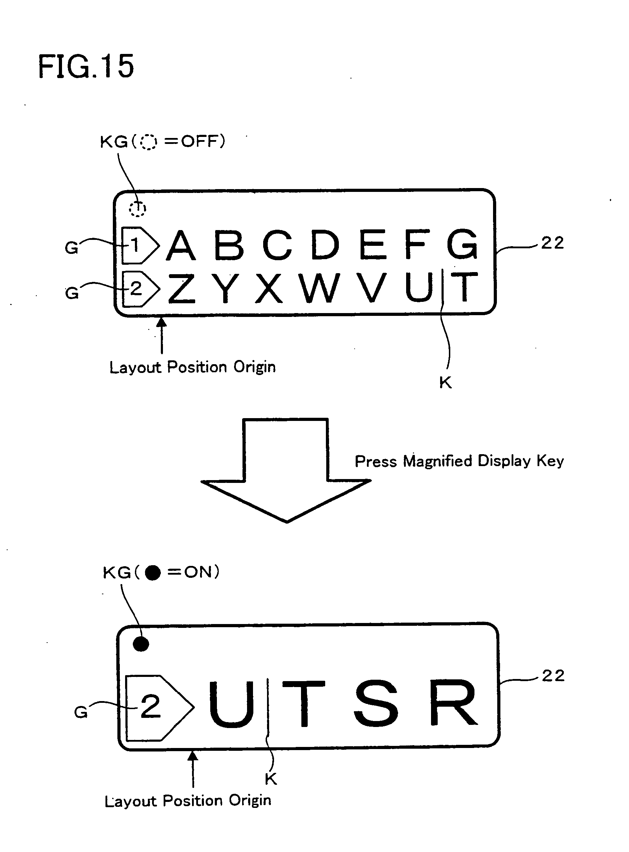

FIG. 15 is an explanatory diagram of display example in the liquid crystal display when changing from the standard display to the magnified display, during the character forward delete operation and the cursor right move operation. The upper diagram shows the display status in the standard display in the liquid crystal display 22 during the character forward delete operation and the cursor K right move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is on and is lit. The line number sign G shows "UTSR" magnified in the line of 2. At the right side of "U", the vertical cursor K is shown.

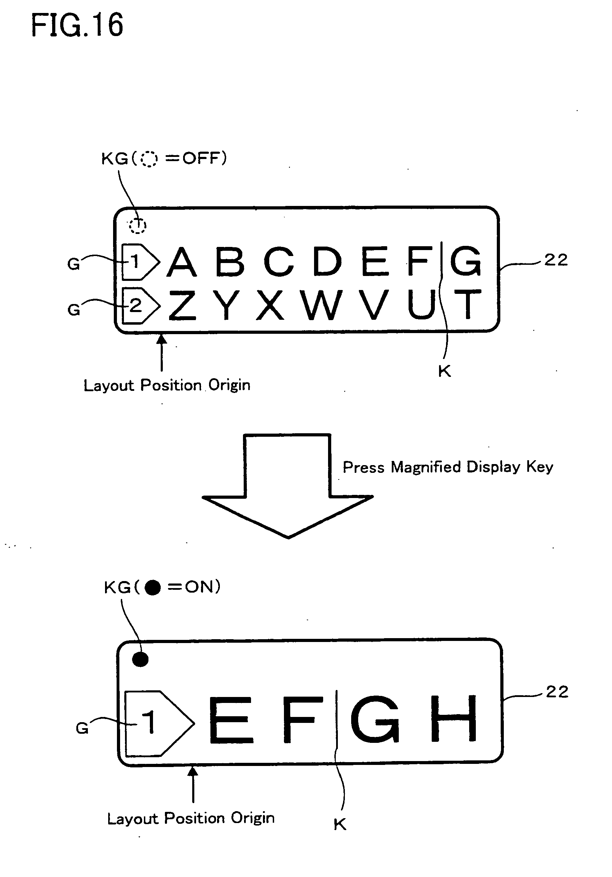

FIG. 16 is an explanatory diagram of a display example in the liquid crystal display when changing from the standard display to the magnified display, during the cursor up move operation. The upper diagram shows the display status in the standard display in the liquid crystal display 22 during the cursor K up move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of F, the vertical cursor K is shown. In this state, when the magnified display key 3G is pressed, the liquid crystal display 22 changes to the display status shown in the lower diagram, and the magnified display guidance KG of the liquid crystal display 22 is on and is lit. The line number sign G shows "EFGH" magnified in the line of 1. At the right side of "F", the vertical cursor K is shown.

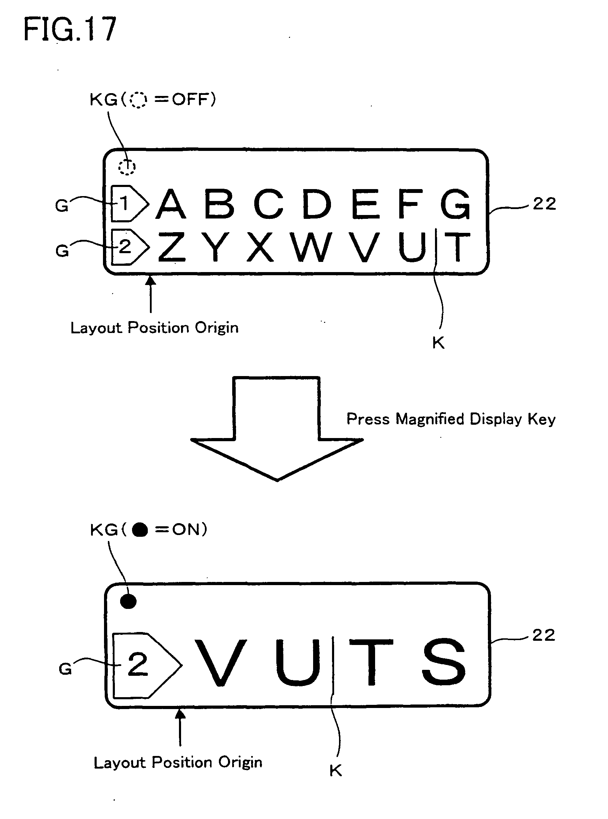

FIG. 17 is an explanatory diagram of a display example in the liquid crystal display when changing from the standard display to the magnified display, during the cursor down move operation. The upper diagram shows the display status in the standard display of the liquid crystal display 22 during the cursor K down move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "U", the vertical cursor K is shown. In this state, when the magnified display key 3G is pressed, the liquid crystal display 22 changes to the display status shown in the lower diagram, and the magnified display guidance KG of the liquid crystal display 22 is on and is lit. The line number sign G shows "VUTS" magnified in the line of 2. At the right side of "U", the vertical cursor K is shown.

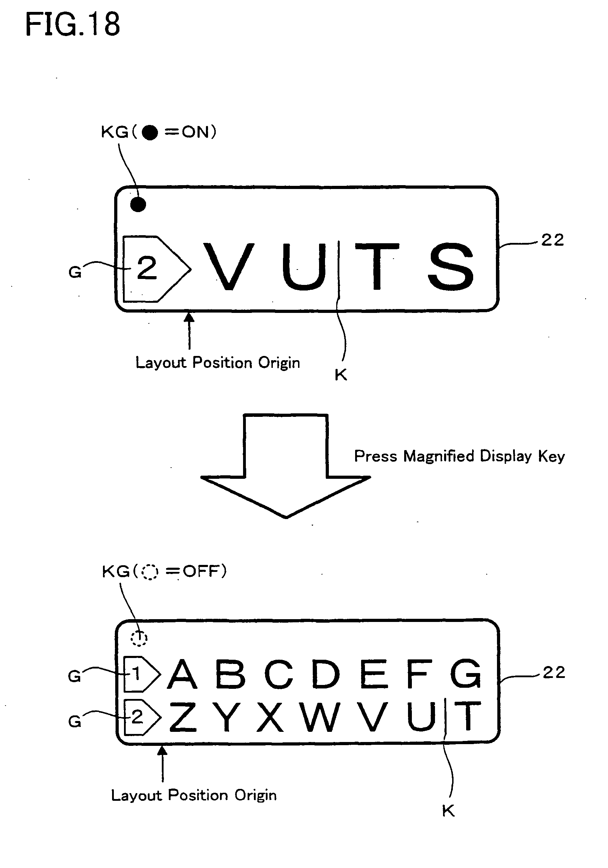

FIG. 18 is an explanatory diagram of a display example in the liquid crystal display when changing from the magnified display to the standard display, during the character input operation, the character backward delete operation, and the cursor left move operation. The upper diagram shows the display status in the magnified display of the liquid crystal display 22 during the character input operation, the character backward delete operation, and the cursor K left move operation, and the magnified display guidance KG of the liquid crystal display 22 is on and is lit. The line number sign G shows "VUTS" in the magnified display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is off and is not lit. The line number sign G shows "ABCDEFG" in the standard display in the line of 1, and "ZYXWVUT" in the standard display in the line of 2. At the right side of "U", the vertical cursor K is shown.

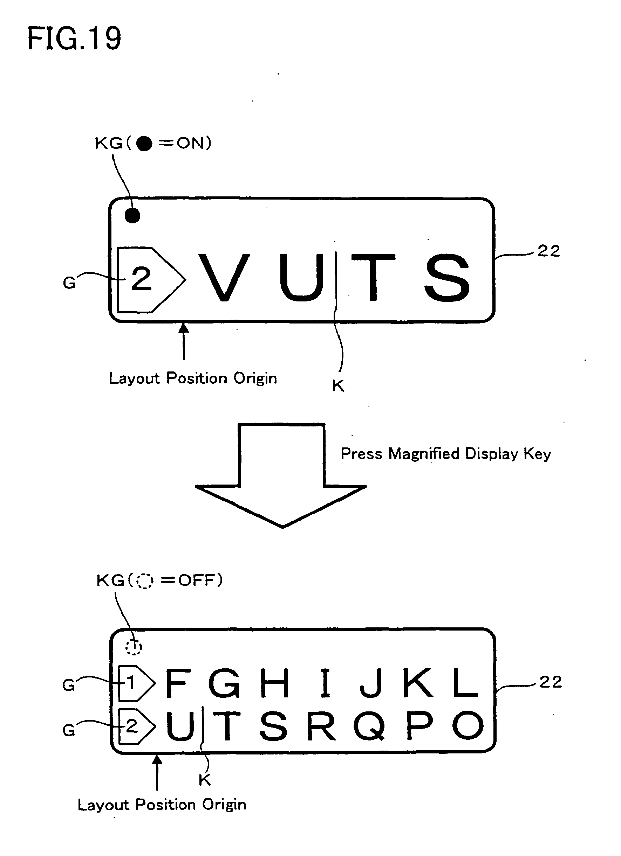

FIG. 19 is an explanatory diagram of a display example in the liquid crystal display when changing from the magnified display to the standard display, during the character forward delete operation and the cursor right move operation. The upper diagram shows the display status in the magnified display of the liquid crystal display 22 during the character forward delete operation and the cursor K right move operation, and the magnified display guidance KG of the liquid crystal display 22 is on and is lit. The line number sign G shows "VUTS" in the magnified display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is off and is not lit. The line number sign G shows "FGHIJKL" in the standard display in the line of 1, and "UTSRQPO" in the standard display in the line of 2. At the right side of "U", the vertical cursor K is shown.

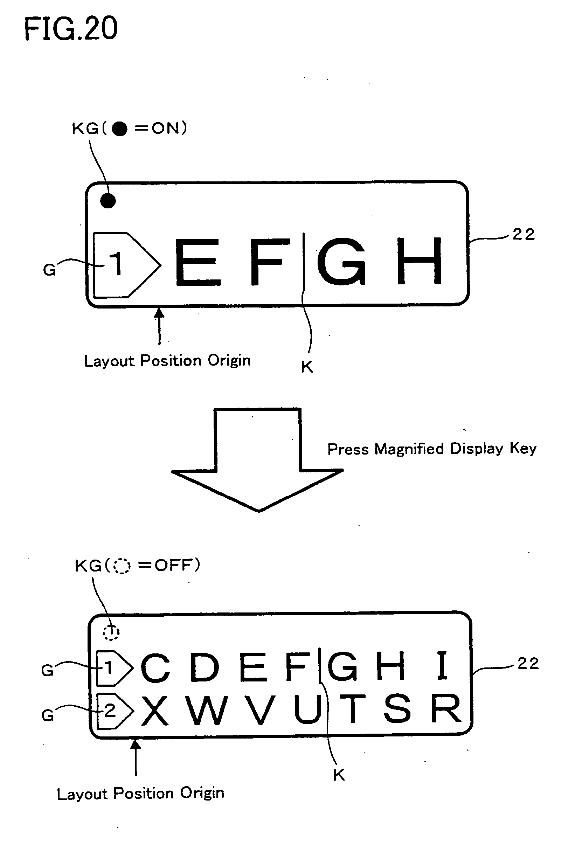

FIG. 20 is an explanatory diagram of a display example in the liquid crystal display when changing from the magnified display to the standard display, during the cursor up move operation. The upper diagram shows the display status in the magnified display of the liquid crystal display 22 during the cursor K up move operation, and the magnified display guidance KG of the liquid crystal display 22 is on and is lit. The line number sign G shows "EFGH" in the magnified display in the line of 1. At the right side of "F", the vertical cursor K is shown. In this state, when the magnified display key 3G is pressed, the liquid crystal display 22 changes to the display status as shown in the lower diagram, and the magnified display guidance KG of the liquid crystal display 22 is off and is not lit. The line number sign G shows "CDEFGHI" in the standard display in the line of 1, and "XWVUTSR" in the standard display in the line of 2. At the right side of "F", the vertical cursor K is shown.

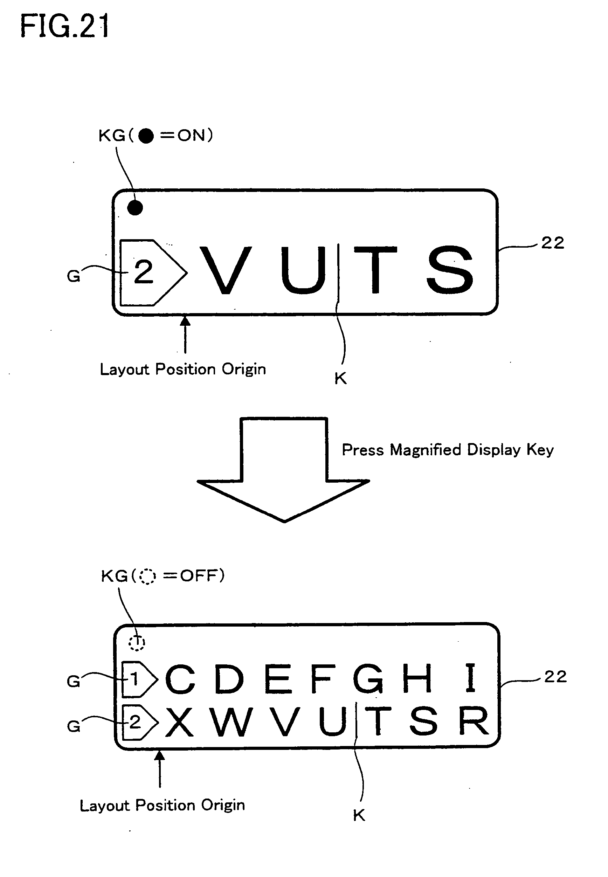

FIG. 21 is an explanatory diagram of a display example in the liquid crystal display when changing from the magnified display to the standard display, during the cursor down move operation. The upper diagram shows the display status in the magnified display of the liquid crystal display 22 during the cursor K down move operation, and the magnified display guidance KG of the liquid crystal display 22 is on and is lit. The line number sign G shows "VUTS" in the magnified display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is off and is not lit. The line number sign G shows "CDEFGHI" in the standard display in the line of 1, and "XWVUTSR" in the standard display in the line of 2. At the right side of "U", the vertical cursor K is shown.

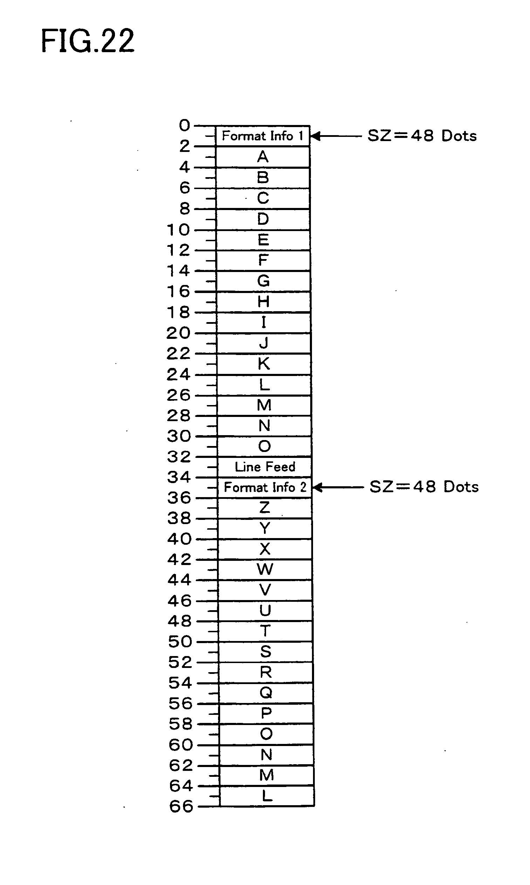

FIG. 22 is an explanatory diagram of text memory storing a plurality of information formats and character string codes. The text memory 61 sequentially stores format information 1, characters "ABCDEFGHIJKLMNO", a line feed code, format information 2, and characters "ZYXWVUTSRQPONML".

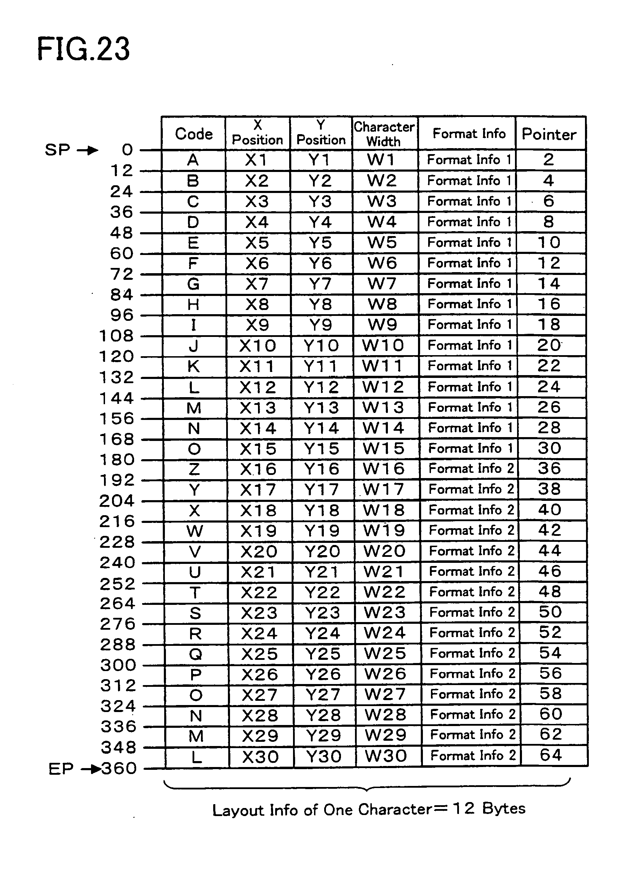

FIG. 23 is an explanatory diagram of layout position information. Character strings being inputted "ABCDEFGHIJKLMNO", and "ZYXWVUTSRQPONML" are disposed vertically between the starting address pointer value SP and the end address pointer value EP, and corresponding to the characters, horizontally, the code, X position, Y position, the character width, the format information, and the pointer are disposed. The layout information of one character is composed of 12 bytes.

FIG. 24 is an explanatory diagram of a character size conversion table setting the relation of a print character size and a display character size. There are six print character sizes, 16, 24, 32, 48, 64 and 96 (dots), and corresponding to each one of these print character sizes, there are six standard display character sizes, 7, 7, 10, 16, 24 and 32. Further, corresponding to each one of these print character sizes, there are six magnified display character sizes, 10, 16, 24, 32, 32 and 32.

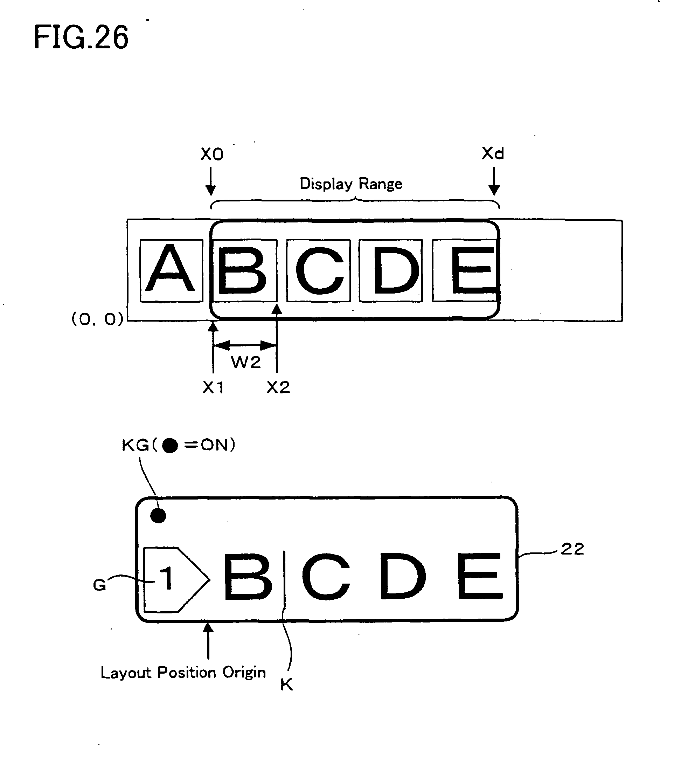

FIG. 26 is an explanatory diagram of a display example of a display range in the magnified display of a character string stored in a text memory.

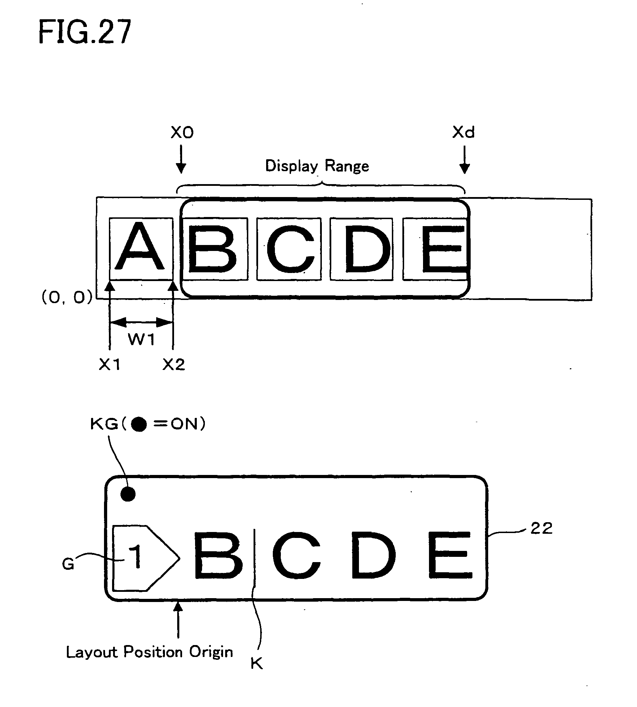

FIG. 27 is an explanatory diagram of a display example of a display range in the magnified display of a character string stored in the text memory.

The operation will be explained, starting from FIG. 4. This control is started when the power is turned on by means of the power key 3K on the keyboard 3, and memories 61 to 68 in the RAM 60 are cleared, and the print mechanism PM is initialized, which is known as an initialization setting process (S1). In the beginning two bytes of the text memory 61, the standard format information data is stored, the document input screen is displayed in the liquid crystal display 22 as shown in FIG. 10, and this input screen shows the cursor K having a size of the display character size corresponding to the print character size of the standard format information, and the line number sign G of 1 showing the first line, and the line number sign G of 2 showing the second line.

Next, the print image display process is executed, that is, characters and symbols stored in the text memory 61 are displayed in the print image (S2). This print image display process will be explained later.

When it is judged that the key input is made (S3 : Yes), the key operation history is stored in the key operation history buffer 66 in the sequence of key operations. In the case of no key input (S3 : No), it waits. When the key operation history exceeds a specified number (five in the embodiment), the oldest history is deleted (S4).

When the size setting key 3H is operated (S3, S5 : Yes), the character size setting process is executed (S6). In this character size setting process shown in FIG. 5, since the character size setting screen (S20) is shown in the liquid crystal display 22 as shown in Fig. 11, when the execution key 3N is operated (S21 : Yes, S22 : No, S24 : Yes) after moving the block cursor BK to the character size to be set (S23) by operating the cursor left move key 3E and the cursor right move key 3F (S21, S22 : Yes), the character size at the position of the block cursor BK is selected and set as a print character size SZ, and the format information including the data of this print character size SZ is stored at the cursor position on the text memory 61 as the change format information (S25). As print character sizes, 16 dots, 24 dots, 32 dots, 48 dots, 64 dots, and 96 dots can be set. Herein, at S21, it is waiting if the key input is not made (S21 : No), and the execution key 3N is not operated at S24, the process returns to S21. After setting of the print character size, by returning, the print image display process (S2) is executed.

After the initial setting process (S1), when any one of cursor move keys 3C, 3D, 3E, 3F is operated (S3 : Yes, S5 : No, S7 : Yes), the cursor move process is executed (S8). The cursor K is indicated by the vertical line so that a character may be inputted at the left side of the cursor K as shown in FIG. 12. In the cursor move process, the cursor K is moved to the position corresponding to cursor move keys 3C, 3D, 3E, 3F.

When the magnified display key 3G is operated (S3 : Yes, S5, S7 : No, S9 : Yes), the magnified display flag 67 and the magnified display guidance KG are inverted (S10, S11). When the magnified display flag 67 is ON, the line indicated by the cursor K is magnified and displayed as shown in FIG. 14 to FIG. 17 in the print image display process (S2). At the same time, the magnified display guidance KG is lit on. When the magnified display flag 67 is OFF, the standard display is shown as shown in FIG. 18 to FIG. 21. At the same time, the magnified display guidance KG is lit off. A relation of the standard character size and the magnified display character size corresponding to the print character size is set as shown in FIG. 24, and when power is supplied by the power key 3K on the keyboard 3, both two lines shown in the liquid crystal display 22 are displayed in the standard display character size 16 dots.

Since the magnified display flag 67 is turned off in the initial setting process (S1), the display is standard at the beginning. Every time the magnified display key 3G is operated repeatedly, the magnified display flag 67 is inverted from ON to OFF, or OFF to ON, and the magnified display and the standard display are switched alternately. At the same time, the magnified display guidance KG is lit on and off alternately.

When keys other than the size setting key 3H, cursor move keys 3C, 3D, 3E, 3F, and the magnified display key 3G is operated, the process corresponding to the key operated is executed (S11). For example, when printable keys are operated such as alphabet keys, symbol keys, and numeric keys (3A) (S3 : Yes, S5 : No, S7, S9 : No), the code data of the character corresponding to the printable key operated is stored in the text memory 61 as the document data, and the print image display process control is executed (S2).

When the print key 3J is operated, the print process is executed, and the process returns to S2. This print process will be briefly described. The format information and the character code are sequentially read out from the text memory 61 shown in FIG. 23, and the layout position information for printing is generated. The layout position information for printing has the code, the X position, the Y position, the character width, and the format information added to each character to be printed, and on the basis of these pieces of information, a dot pattern for printing in the CGROM 53 for printing is read out, developed into the print data buffer 66, and synthesized and stored, and the dot image data for printing of this print data buffer 66 is outputted to the print mechanism PM, and printed on the laminate film tape 7.

With reference to FIG. 6 to FIG. 9, the print image display process at S2 in FIG. 4 will be explained. At this time, it is supposed as follows: the character string of the first line "ABCDEFGHIJKLMNO" and the character string of the second line "ZYXWVUTSRQPONML" at the upper side of FIG. 13 are inputted by the keyboard 3, and the format information 1, characters "ABCDEFGHIJKLMNO", the line feed code, the format information 2, and characters "ZYXWVUTSRQPONML" are sequentially stored in the text memory 61 as shown in FIG. 22. The lower diagram in FIG. 13 shows the character strings being inputted in the upper diagram in the standard display in the liquid crystal display 22. At this time, the magnified display guidance KG of the liquid crystal display is off and is not lit. "ABCDEFG" of the standard display is shown in the line of 1 of the line number sign G, and "ZYXWVUT" of the standard display is shown in the line of 2 of the line number sign G. At the right side of "U", the vertical cursor K is shown.

When this process is started, data in the text memory 61 is searched sequentially from the starting address, and the layout position information for printing in order to develop the dot pattern data for printing in the print data buffer 65 is determined about each one of characters and symbols to be printed, on the basis of the format information, the character code, and the line feed code, and the layout position information for printing is stored in the layout position information memory 63 (S30). The layout position information for printing is determined from the format information, the character code, the line feed code, and the dot pattern data for printing shown in FIG. 23. Herein, the X position and the Y position of the layout position information for printing are determined by supposing the X-axis to be the axis of abscissas, and the Y-axis to be the axis of ordinates.

A process of converting from the layout position information for printing to the layout position information for displaying will be explained. In the magnified display of the display screen of the liquid crystal display 22, the number of characters to be displayed is supposed to be four characters.

When the magnified display flag 67 is ON (S31 : Yes), first to create the layout position information for displaying relating to the data included in the cursor line, the data in lines other than the cursor line is deleted (S32). The layout position information for printing shown in FIG. 23 includes the pointer information showing the relation with the text memory 61, and the data to be deleted can be determined. After deleting data in lines other than the cursor line, in order to display the data of the cursor line with bottom alignment, the Y position of the layout position information for displaying of all data in the cursor line is set to 0 (S33). Accordingly, the layout position information for printing shown in FIG. 23 is converted into the layout position information for the magnified display on the basis of the character size conversion table shown in FIG. 24 (S34).

Subsequently, it is judged if the final key operation of the keyboard 3 is the magnified display key 3G or not (S35). If the final key operation of the keyboard 3 is not the magnified display key 3G (S35 : No), the process skips to S66, the operation continues to the process corresponding to the keys operated according to the setting by the time. Advancing further to S67 in FIG. 9, the parameters are initialized. When the final key operation is the magnified display key 3G (S35 : Yes), the process advances to S36, the operation history of the keyboard 3 is averaged.

At S36, on the basis of the operation history of the key operation history buffer 66 stored at S4, the operation history is averaged by weighting on each operation stored in the key operation history buffer 66 in order of inputting from the latest operation.

For example, starting from the latest operation in the key operation history buffer 66, in the case that the operation history is stored in the sequence of the operation of the cursor left move key 3E, the operation of the character key 3A, the operation of the cursor down move key 3D, and the operation of the cursor left move key 3E, the history is averaged as follows by weighting on each of the operations by "2×(4-n)" on the basis of the sequence "n" from the latest operation.

Cursor left move key operation: 2×(4-0)+2×(4-4)=8

Character key operation: 2×(4-1)+2×(4-2)=10

Cursor down move key operation: 2×(4-3)=2

By averaging the operation history, the latest key operation immediately before the operation of the magnified display key 3G is judged to be the operation of the character key 3A of the largest value.

Herein, since the averaging operation of the operation history of the keyboard 3 is performed according to classification of editing operations including the character input operation by the character key 3A, the forward delete operation by the delete key 3L, the backward delete operation by the backspace key 3M, the left move operation of the cursor K by the cursor left move key 3E, the right move operation of the cursor K by the cursor right move key 3F, the up move operation of the cursor K by the cursor up move key 3C, and the down move operation of the cursor K by the cursor down move key 3D, it is judged that the result of the averaging operation of the operation history by the operation of the keyboard 3 at S36 is any one of the editing operations, and the position of the cursor K in the LCD 22 is decided by this judgment.

Accordingly, first of all, it is judged if the result of the averaging operation of the operation history by the operation of the keyboard 3 at S37 in FIG. 7 is the character input operation by the character key 3A or not. If it is judged to be the character input operation (S37 : Yes), the process advances to S38, as shown in FIG. 14, the layout position of the cursor K is set to the position one character leftward from the right end of the LCD 22 while maintaining the layout position of the cursor K and the character immediately before the change of the display screen. If it is judged not to be the character input operation (S37 : No), the process advances to S39.

At S39, it is judged if it is the forward delete operation by the delete key 3L or not. If it is judged to be the forward delete operation of the character (S39 : Yes), the process advances to S40, as shown in FIG. 15, the layout position of the cursor K is set to the position one character rightward from the left end of the LCD 22 while maintaining the layout position of the cursor K and the character immediately before the change of the display screen. If it is judged not to be the forward delete operation of the character (S39 : No), the process advances to S41.

At S41, it is judged if it is the backward delete operation by the backspace key 3M or not. If it is judged to be the backward delete operation of the character (S41 : Yes), the process advances to S42, as shown in FIG. 14, the layout position of the cursor K is set to the position one character leftward from the right end of the LCD 22 while maintaining the layout position of the cursor K and the character immediately before the change of the display screen. If it is judged not to be the backward delete operation of the character (S41 : No), the process advances to S43.

At S43, it is judged if it is the left move operation of the cursor K by the cursor left move key 3E or not. If it is judged to be the left move operation of the cursor K (S43 : Yes), the process advances to S44, as shown in FIG. 14, the layout position of the cursor K is set to the position one character leftward from the right end of the LCD 22 while maintaining the layout position of the cursor K and the character immediately before the change of the display screen. If it is judged not to be the left move operation of the cursor K (S43 : No), the process advances to S45.

At S45, it is judged if it is the right move operation of the cursor K by the cursor right move key 3F or not. If it is judged to be the right move operation of the cursor K (S45 : Yes), the process advances to S46, as shown in FIG. 15, the layout position of the cursor K is set to the position one character rightward from the left end of the LCD 22 while maintaining the layout position of the cursor K and the character immediately before the change of the display screen. If it is judged not to be the right move operation of the cursor K (S45 : No), the process advances to S47.

At S47, it is judged if it is the up move operation of the cursor K by the cursor up move key 3C or not. If it is judged to be the up move operation of the cursor K (S47 : Yes), the process advances to S48, as shown in FIG. 16, the layout position of the cursor K is set to the position one character rightward from the position in the middle of the LCD 22 in the upper line by moving the cursor K to the upper line while maintaining the layout position of the cursor K and the character immediately before the change of the display screen. If it is judged not to be the up move operation of the cursor K (S47 : No), the process advances to S49.

At S49, it is the down move operation of the cursor K, as shown in FIG. 17, the layout position of the cursor K is set to the position one character rightward from the position in the middle of the LCD 22 in the lower line by moving the cursor K to the lower line while maintaining the layout position of the cursor K and the character immediately before the change of the display screen, and the process advances to S67 in FIG. 9.

Returning to S31 in FIG. 6, when the magnified display flag 67 is OFF (S31 : No), the layout position information for printing shown in FIG. 23 is converted to the layout position information for the standard display on the basis of the character size conversion table show in FIG. 24 (S50).

For example, when the print height is 96 dots and the display height is 32 dots, or equivalently, when the size ratio of the print character and the display is 3:1, the X position, the Y position, and the layout position information for printing of the character width are all multiplied by one thirds, and the layout position information for displaying of the data in the text memory 61 is determined.

Subsequently, it is judged if the final key operation of the keyboard 3 is the magnified display key 3G or not (S51). If the final key operation is not the magnified display key 3G (S51 :No), the process advances to S66, the process corresponding to the keys operated according to the setting by the time continues. At S67 in FIG. 9, parameters are initialized. If the final key operation is the magnified display key 3G (S51 : Yes), the process advances to S52, the operation history of the keyboard 3 is averaged.

At S52, on the basis of the operation history of the key operation history buffer 66 stored at S4 in FIG. 4, the operation history is averaged by weighting on each operation stored in the key operation history buffer 66 in order of inputting from the latest operation. The averaging operation of the operation history has been explained at S36, and explanation is omitted herein. The result of the averaging operation of the operation history by the operation of the keyboard 3 at S52 is judged to be which editing operation, and depending on this judgment, it is decided to locate the cursor K at which position in the LCD 22.

Accordingly, at S53 in FIG. 8, it is judged if the result of the averaging operation of the operation history by the operation of the keyboard 3 is the character input operation by the character key 3A or not. If it is judged to be the character input operation (S53 : Yes), the process advances to S54, as shown in FIG. 18, the layout position of the cursor K is set to the position one character leftward from the right end of the LCD 22 while maintaining the layout position of the cursor K and the character immediately before the change of the display screen. If it is judged not to be the character input operation (S53 : No), the process advances to S55.

At S55, it is judged if the operation is the forward delete operation by the delete key 3L or not. If it is judged to be the forward delete operation of the character (S55 : Yes), the process advances to S56, as shown in FIG. 19, the layout position of the cursor K is set to the position one character rightward from the left end of the LCD 22 while maintaining the layout position of the cursor K and the character immediately before the change of the display screen. If it is judged not to be the forward delete operation of the character (S55 : No), the process advances to S57.

At S57, it is judged if the operation is the backward delete operation by the backspace key 3M or not. When it is judged to be the backward delete operation of the character (S57 : Yes), the process advances to S58, as shown in FIG. 18, the layout position of the cursor K is set to the position one character leftward from the right end of the LCD 22 while maintaining the layout position of the cursor K and the character immediately before the change of the display screen. If it is judged not to be the backward delete operation of the character (S57 : No), the process advances to S59.

At S59, it is judged if the operation is the left move operation of the cursor K by the cursor left move key 3E or not. When it is judged to be the left move operation of the cursor K (S59 : Yes), the process advances to S60, as shown in FIG. 18, the layout position of the cursor K is set to the position one character leftward from the right end of the LCD 22 while maintaining the layout position of the cursor K and the character immediately before the change of the display screen. If it is judged not to be the left move operation of the cursor K (S59 : No), the process advances to S61.

At S61, it is judged if the operation is the right move operation of the cursor K by the cursor right move key 3F or not. When it is judged to be the right move operation of the cursor K (S61 : Yes), the process advances to S62, as shown in FIG. 19, the layout position of the cursor K is set to the position one character rightward from the left end of the LCD 22 while maintaining the layout position of the cursor K and the character immediately before the change of the display screen. If it is judged not to be the right move operation of the cursor K (S61 : No), the process advances to S63.

At S63, it is judged if the operation is the up move operation of the cursor K by the cursor up move key 3C or not. When it is judged to be the up move operation of the cursor K (S63 : Yes), the process advances to S64, as shown in FIG. 20, the layout position of the cursor K is set to the position one character rightward from the position in the middle of the LCD 22 in the upper line by moving the cursor K to the upper line while maintaining the layout position of the cursor K and the character immediately before the change of the display screen. If it is judged not to be the up move operation of the cursor K (S63 : No), the process advances to S65.

At S65, the remaining operation is the down move operation of the cursor K, and as shown in FIG. 21, the layout position of the cursor K is set to the position one character rightward from the position in the middle of the LCD 22 in the lower line by moving the cursor K to the lower line while maintaining the layout position of the cursor K and the character immediately before the change of the display screen, and the process advances to S67 in FIG. 9.

At S67 in FIG. 9, parameter information relating to the print process in the parameter memory 62 is initialized. That is, in the parameter memory 62, the starting address of the layout position information for printing stored in the layout position information memory 63 is set in the starting address pointer value SP, and the next address to the end address (end address + 2) of the layout position information for printing stored in the layout position information memory 63 is set in the end address pointer value EP, and the initial value "0" is set in the data count value DC.

The character code, the X position, the Y position, the character width, the format information, and the pointer to the text memory in the layout position information memory 63 are composed of two bytes each. Next, the address portion of 12 times of the data count value DC is added to the starting address, and the data group of search addresses is read out (S68). The text data corresponding to the data group being read out is judged to be present within the display range set at S30 to S65 or not (S69). The judging process at S69 will be described below.

If the following condition is satisfied, the text data being read out is judged to be within the display range specified. The condition is as follows: specified display start X position < display layout of the data read-out X position + character width of display layout position information of the data read-out, and specified display start X position + display lateral width (right end X position of display)> display layout of the data read-out X position.

For example, as shown in FIG. 26, when the cursor K is positioned at the right side of the character data "B" of the character string "ABCDE", the final key operation is set to the magnified display mode, and the key operation immediately before is the right move operation of the cursor K, the display range is specified so that the character data "B" may be located at the left end of the liquid crystal display 22.

At this time, when character data "B" is read out, X0 (display start X position) is smaller than X-1 (display layout X position of character "B") + X2 (X position of character width W2 of character data "B"). Further, X0 (display start X position) + Xd (X position of lateral width of display) is larger than X1 (display layout X position of character "B"), and therefore the character data "B" is judged to be within the display range specified.

Thus, when the two conditions above are satisfied, it is judged that the data read-out is within the display range (S69 : Yes), and the display image generation of the data is performed (S70, S71).

On the other hand, when the following condition is satisfied, it is judged that the data read-out is not within the display range specified. The condition is as follows: specified display start X position ≥ display character layout of the data read-out X position + character width of display layout position information of the data read-out, or specified display start X position + display lateral width (right end X position of display) ≤ display layout X position of the data read-out.

For example, as shown in FIG. 27, when the cursor K is positioned at the right side of the character data "B" of the character string "ABCDE", the final key operation is the magnified display mode, and the key operation immediately before is the right move operation of the cursor K, the display range is specified so that the character data "B" may be located at the left end of the liquid crystal display 22.

At this time, when the character data "A" is read out, X0 (display start X position) is larger than X1 (display layout X position of character "A") + X2 (X position of character width W1 of the character data "A"), and therefore the character data "A" is judged to be out of the display range specified.

When the above conditions are satisfied, the data read-out is judged to be out of the display range (S69 : No), and the process advances to S72 by skipping S70 and S71 for generation of the display image.

When the generation of the display image is started, the print character size included in the format information in the data read-out is converted to the display character size by the character size conversion table (S70).

For example, as shown in FIG. 22 and FIG. 23, the print character size SZ of the character "A" in the format information 1 is set at 48 dots. Hence, the display character size of the character "A" is converted to 16 dots in the standard display mode, or 32 dots in the magnified display mode, according to the character size conversion table in FIG. 24.

However, since the height of the liquid crystal display 22 is 32 dots, the maximum character size for the display is 32 dots, in the magnified display mode. Therefore, whether the print character size SZ is set at 64 dots or 48 dots, it is converted to 32 dots by the character size conversion table in the magnified display mode. Thus, if the print character size SZ is 48 dots or more, it is all converted to 32 dots in the magnified display mode. Therefore, if the print character size SZ is set at 48 dots or more, the original character size is hardly to be known in the magnified display mode. However, the X position and the character width W of the display layout position information are determined on the basis of the print layout position information. Therefore the character interval of characters displayed on the liquid crystal display 22 differs depending on the specified print character size. Hence, the original print character size may be estimated from the difference in the character interval on the display.

On the basis of the display character size determined, the character code, and the format information, characters and symbols of the display character size specified and the dot pattern data for displaying are read out from the CGROM 53, and stored in the display data buffer 64 (S71).

Then, the data count value DC is incremented by one (S72). If the search address adding address portion of 12 times of the data count value DC to the current address pointer value (current address) CP determined at S68 does not coincide with the address indicated by the end address pointer value EP (S73 : No), the process returns to S68, the data group of the search address determined at S73 is read in. When they are coincides, on the other hand (S73 : Yes), the dot image data for displaying developed and stored into the display data buffer 64 is outputted to the video RAM 24, and displayed in the liquid crystal display 22 (S74). This control is terminated, and returned to the print image display process at S2 in FIG. 4.

As specifically described above, the document processing apparatus 1 in the first embodiment comprises the input device that is used for inputting the character data such as characters and symbols and various command data, the liquid crystal display 22 that is capable of displaying the character data in the display screen, the size setting device that sets the magnified or reduced display size of character data to be displayed in the liquid crystal display 22, the range specifying device that specifies the display range of the character data, the cursor K that indicates the input position of the character data and the command data by the input device on the screen of the liquid crystal display 22, the history storing device that stores the input history of the character data and the command data being inputted by the input device, the analyzing device that analyzes the data being inputted in the history storing device, and the display control device for analyzing the data being inputted in the history storing device by the analyzing device when the display screen of the liquid crystal display 22 is changed over by the change of the size setting device, and changes the display range of the character data due to the display of the cursor K at the position determined on the basis of the result of the analysis, and displays at the predetermined position of the cursor K by the range specifying device. Accordingly, the flow of the operation by the user is known by the history storing device, and by analyzing the flow of the operation by the analyzing device, when the display screen of the liquid crystal display 22 is changed by the size setting device, the position of the cursor K in the liquid crystal display 22 can be moved to an optimum position for operation by predicting the operation of the user. Therefore, if the display screen of the liquid crystal display 22 is changed by the size setting device, the user can continue the editing work comfortably without losing sight of the cursor K, thereby easily finding the contents of editing by the time. As a result, this can lighten the workload for the user. These mechanisms provide ease of use, so that the liquid crystal display 22 of the relatively small size can be adopted, which may contribute greatly to the reduction of the cost.

In the document processing apparatus 1, when the display screen of the liquid crystal display 22 is changed by the size setting device, the analyzing device analyzes the flow of the operation by the input frequency of the character data and the command data being inputted by the time. The position of the cursor K of the liquid crystal display 22 is moved to an optimum position for the operation by predicting the operation by the user. Further, the input frequency is calculated by weighting on each data being inputted to the history storing device in order of inputting from the data inputted most immediately before the change of the display screen of liquid crystal display 22, so that the result conforming to the flow of operation can be obtained.

In the document processing apparatus 1, the analyzing device is designed to calculate the input frequency of the character data and the command data, and to judge the editing operation of the maximum value of the result as the editing operation executed immediately before the change of the display screen of the liquid crystal display 22, so that the direction of the operation can be determined in the flow of the entire editing operation.

In the document processing apparatus 1, the analyzing device is designed to calculate the input frequency of the character data and the command data according to the classification of editing operations including the character input operation, the character forward delete operation, the character backward delete operation, the cursor left move operation, the cursor right move operation, the cursor up move operation, and the cursor down move operation. Therefore when the display screen of the liquid crystal display 22 is changed by the size setting device, the position of the cursor K on the liquid crystal display 22 can be moved to the optimum position conforming to the operation contents by predicting the operation of the user. Accordingly, the user can continue the editing operation comfortably without losing sight of the cursor K.

In the document processing apparatus 1, the analyzing device calculates the input frequency of the character data and the command data, and when it is judged that the character input operation has been done immediately before the change of the display screen of the liquid crystal display 22, the cursor K is set to the position one character leftward from the right end of the liquid crystal display 22 while maintaining the layout of the cursor K and the character immediately before the change of the display screen of the liquid crystal display 22, and therefore even after the display screen of the liquid crystal display 22 is changed by the size setting device, the user can continue the character input operation while confirming characters being inputted. Hence the user can continue the editing operation comfortably.

In the document processing apparatus 1, the analyzing device calculates the input frequency of the character data and the command data, and when it is judged that the character forward delete operation has been done immediately before the change of display screen of the liquid crystal display 22, the cursor K is set to the position one character rightward from the left end of the liquid crystal display 22 while maintaining the layout of the cursor K and the character immediately before the change of the display screen of the liquid crystal display 22. Therefore even after the display screen of the liquid crystal display 22 is changed by the size setting device, the user can continue the forward delete operation while confirming the character to be deleted, and the character is not deleted by mistake, and hence extra character input operation due to the wrong deletion of the character can be avoided.

In the document processing apparatus 1, the analyzing device calculates the input frequency of the character data and the command data, and when it is judged that the character backward delete operation has been done immediately before the change of the display screen of the liquid crystal display 22, the cursor K is set to the position one character leftward from the right end of the liquid crystal display 22 while maintaining the layout of the cursor K and the character immediately before the change of the display screen of the liquid crystal display 22, and therefore even after the display screen of the liquid crystal display 22 is changed by the size setting device, the user can continue the backward delete operation while confirming the character to be deleted, and the character is not deleted by mistake, and hence extra character input operation due to the wrong deletion of the character can be avoided.

In the document processing apparatus 1, the analyzing device calculates the input frequency of the character data and the command data, and when it is judged that the left move operation of the cursor K has been done immediately before the change of the display screen of the liquid crystal display 22, the cursor K is set to the position one character leftward from the right end of the liquid crystal display 22 while maintaining the layout of the cursor K and the character immediately before the change of the display screen of the liquid crystal display 22, and therefore even after the display screen of the liquid crystal display 22 is changed by the size setting device, the user can continue the left move operation of the cursor K while confirming the location to be moved of the cursor K, and hence the cursor K can be stopped securely at the location specified without overrunning.

In the document processing apparatus 1, the analyzing device calculates the input frequency of the character data and the command data, and when it is judged that the right move operation of the cursor K has been done immediately before the change of the display screen of the liquid crystal display 22, the cursor K is set to the position one character rightward from the left end of the liquid crystal display 22 while maintaining the layout of the cursor K and the character immediately before the change of the display screen of the liquid crystal display 22, and therefore even after the display screen of the liquid crystal display 22 is changed by the size setting device, the user can continue the right move operation of the cursor K while confirming the location to be moved of the cursor K, and hence the cursor K can be stopped securely at the location specified without overrunning.

In the document processing apparatus 1, the analyzing device calculates the input frequency of the character data and the command data, and when it is judged that the up move operation of the cursor K has been done immediately before the change of display screen of the liquid crystal display 22, the cursor K is set to the position one character rightward from the position in the middle of the liquid crystal display 22 while maintaining the layout of the cursor K and the character immediately before the change of the display screen of the liquid crystal display 22, and therefore even after the line is moved up and the display screen of the liquid crystal display 22 is changed by the size setting device, the user can see before and after the cursor K, and can instantly recognizes which direction the cursor K is to be moved in.

In the document processing apparatus 1, the analyzing device calculates the input frequency of the character data and the command data, and when it is judged that the down move operation of the cursor K has been done immediately before the change of the display screen of the liquid crystal display 22, the cursor K is set to the position one character rightward from the position in the middle of the liquid crystal display 22 while maintaining the layout of the cursor K and the character immediately before the change of the display screen of the liquid crystal display 22. Therefore even after the line is moved down and the display screen of the liquid crystal display 22 is changed by the size setting device, the user can see before and after the cursor K, and can instantly recognizes which direction the cursor K is to be moved in.

When the history data stored in the history storing device exceeds a specified number, it is designed to delete the oldest history data first, and the storage capacity of the RAM 60 including the key operation history buffer 66 can be avoided being increased excessively. The input frequency is calculated by the new history data of the character data and the command data, and the editing operation of the maximum of the calculated values is judged to be the editing operation immediately before the change of the display screen of the liquid crystal display 22, and hence the precision of judging is enhanced.

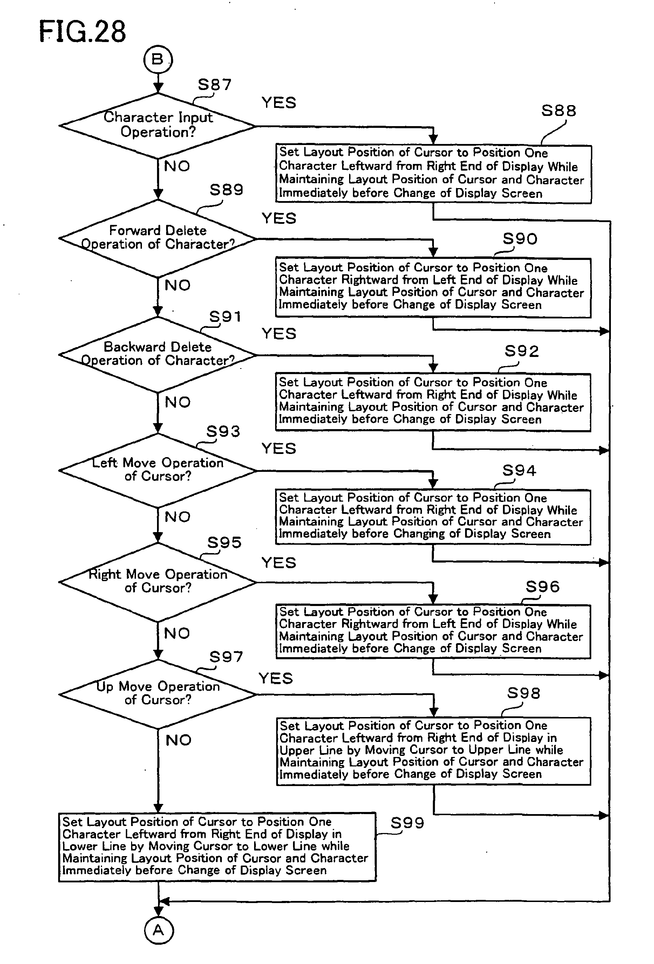

A second embodiment of the invention will be described below with reference to FIG. 28 to FIG. 31.

FIG. 28 is a flowchart of the print image display process in the magnified three-character display in the second embodiment.

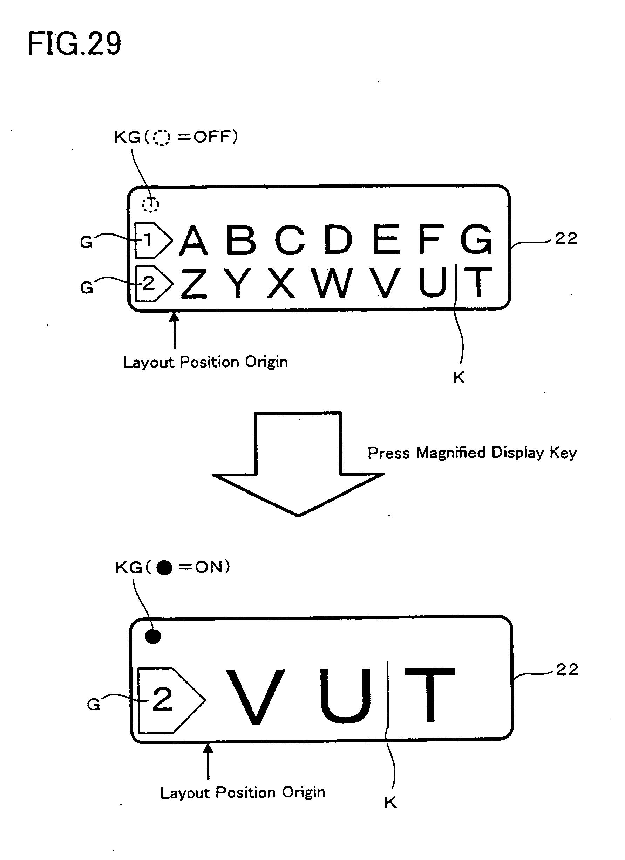

FIG. 29 is an explanatory diagram of a display example in the liquid crystal display when changing from the standard display to the magnified display, during the character input operation, the character backward delete operation, the cursor left move operation, and the cursor down move operation in the magnified three-character display. The upper diagram shows the display status in the standard display in the liquid crystal display 22 during the character input operation, the character backward delete operation, the cursor K left move operation, and the cursor K down move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "U", the vertical cursor K is shown. In this state, when the magnified display key 3G is pressed, the liquid crystal display 22 changes to the display status shown in the lower diagram, and the magnified display guidance KG of the liquid crystal display 22 is on and is lit. The line number sign G shows three characters "VUT" magnified in the line of 2. At the right side of "U", the vertical cursor K is shown.

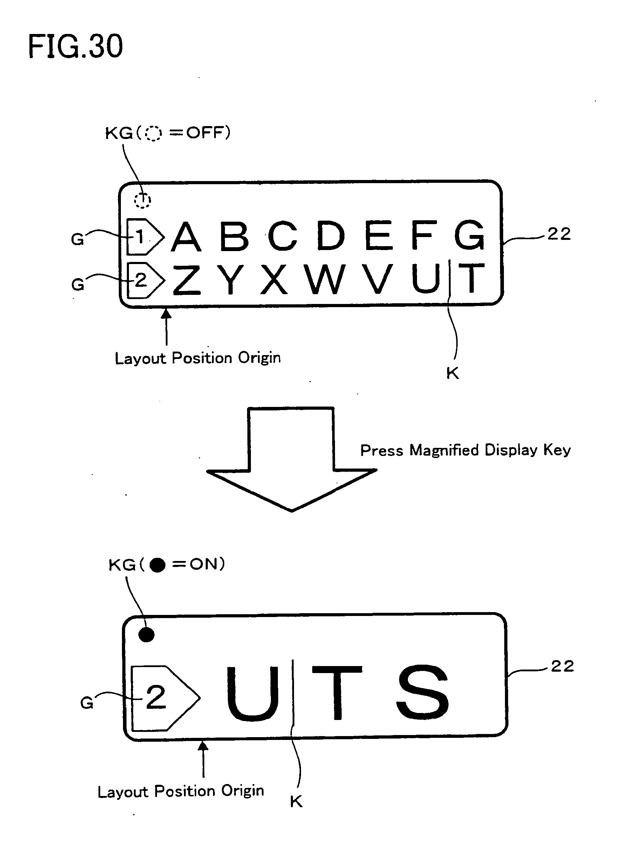

FIG. 30 is an explanatory diagram of a display example in the liquid crystal display when changing from the standard display to the magnified display, during the character forward delete operation, and the cursor right move operation in magnified three-character display. The upper diagram shows the display status in the standard display in the liquid crystal display 22 in the character forward delete operation, and the cursor K right move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "U", the vertical cursor K is shown. In this state, when the magnified display key 3G is pressed, the liquid crystal display 22 changes to the display status as shown in the lower diagram, and the magnified display guidance KG of the liquid crystal display 22 is on and is lit. The line number sign G shows three characters "UTS" magnified in the line of 2. At the right side of "U", the vertical cursor K is shown.

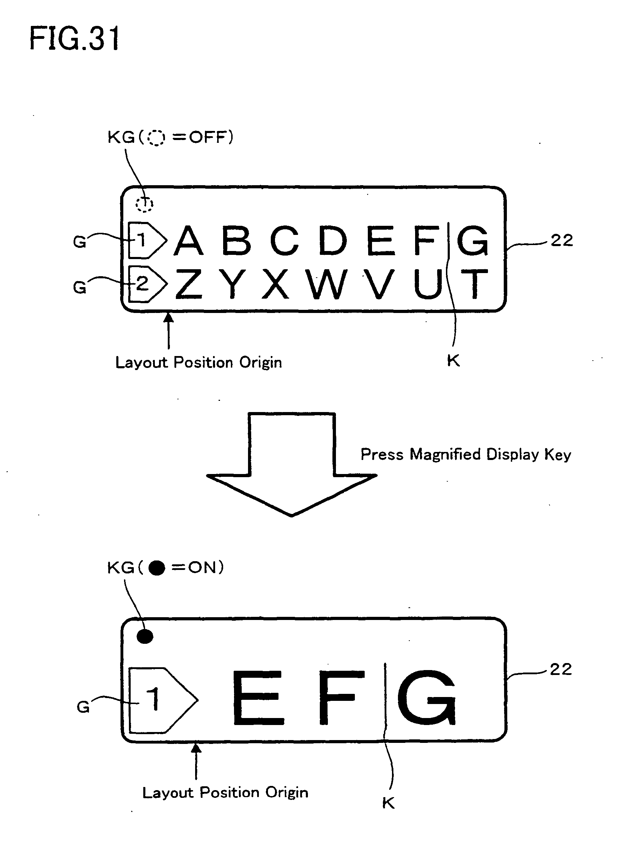

FIG. 31 is an explanatory diagram of a display example in the liquid crystal display when changing from the standard display to the magnified display, during the cursor up move operation in the magnified three-character display. The upper diagram shows the display status in the standard display in the liquid crystal display 22 during the cursor up move operation, and the magnified display guidance KG of the liquid crystal display 22 is off and is not lit. The line number sign G shows "ABCDEFG" in the standard display in the line of 1, and shows "ZYXWVUT" in the standard display in the line of 2. At the right side of "F", the vertical cursor K is shown. In this state, when the magnified display key 3G is pressed, the liquid crystal display 22 changes to the display status shown in the lower diagram, and the magnified display guidance KG of the liquid crystal display 22 is on and is lit. The line number sign G shows three characters "EFG" magnified in the line of 1. At the right side of F, the vertical cursor K is shown.

The document processing apparatus 1 in the second embodiment is basically the same with the operation as the document processing apparatus 1 in the first embodiment, except that the magnified display of the display screen of the liquid crystal display 22 carries three characters in the document processing apparatus 1 in the second embodiment, as compared with four characters in the document processing apparatus 1 in the first embodiment. The document processing apparatus 1 in the second embodiment will be explained below mainly with reference to different points from the document processing apparatus 1 in the first embodiment, and the same parts are identified with same reference numerals.

What differs from the document processing apparatus 1 in the first embodiment lies in the flowchart of the first embodiment shown in FIG. 7, the operation of the second embodiment will be explained with reference to the flowchart in FIG. 28.

FIG. 28 is sequential to S36 in FIG. 6 of the first embodiment. The result of the averaging operation of the keyboard 3 can be classified as any one of the editing operations including the character input operation by the character key 3A, the forward delete operation by the delete key 3L, the backward delete operation by the backspace key 3M, the cursor K left move operation by the cursor left move key 3E, the cursor K right move operation by cursor right move key 3F, the cursor K up move operation by the cursor up move key 3C, and the cursor K down move operation by the cursor down move key 3D, and therefore after FIG. 28, the result of the averaging operation of the operation history by the operation of the keyboard 3 at S36 in FIG. 6 is judged according to the classification of editing operations, and the location of the cursor K in the LCD 22 is determined according to the judging results.

First of all, it is judged if the result of the averaging operation of the operation history by the operation of the keyboard 3 at S87 is the character input operation by the character key 3A or not. If it is judged to be the character input operation (S87 : Yes), the process advances to S88, as shown in FIG. 29, the layout position of the cursor K is set to the position one character leftward from the right end of the LCD 22 while maintaining the layout position of the cursor K and the character immediately before the change of the display screen. If it is judged not to be the character input operation (S87 : No), the process advances to S89.

At S89, it is judged if the operation is the forward delete operation by the delete key 3L or not. If it is judged to be the character forward delete operation (S89 : Yes), the process advances to S90, as shown in FIG. 30, the layout position of the cursor K is set to the position one character rightward from the left end of the LCD 22 while maintaining the layout position of the cursor K and the character immediately before the change of display screen. If it is judged not to be the character forward delete operation (S89 : No), the process advances to S91.

At S91, it is judged if the operation is the backward delete operation by the backspace key 3M or not. If it is judged to be the character backward delete operation (S91 : Yes), the process advances to S92, as shown in FIG. 29, the layout position of the cursor K is set to the position one character leftward from the right end of the LCD 22 while maintaining the layout position of the cursor K and the character immediately before the change of the display screen. If it is judged not to be the character backward delete operation (S91 : No), the process advances to S93.

At S93, it is judged if the operation is the cursor K left move operation by the cursor left move key 3E or not. If it is judged to be the cursor K left move operation (S93 : Yes), the process advances to S94, as shown in FIG. 29, the layout position of the cursor K is set to the position one character leftward from the right end of the LCD 22 while maintaining the layout position of the cursor K and the character immediately before the change of the display screen. If it is judged not to be the cursor K left move operation (S93 : No), the process advances to S95.

At S95, it is judged if the operation is the cursor K right move operation by the cursor right move key 3K or not. If it is judged to be the cursor K right move operation (S95 : Yes), the process advances to S96, as shown in FIG. 30, the layout position of the cursor K is set to the position one character rightward from the left end of the LCD 22 while maintaining the layout position of the cursor K and the character immediately before the change of the display screen. If it is judged not to be the cursor K right move operation (S95 : No), the process advances to S97.

At S97, it is judged if the operation is the cursor K up move operation by the cursor up move key 3C or not. If it is judged to be the cursor K up move operation (S97 : Yes), the process advances to S98, as shown in FIG. 31, the layout position of the cursor K is set to the position one character leftward from the right end of the LCD 22 in the upper line by moving the cursor K to the upper line while maintaining the layout position of the cursor K and the character immediately before the change of the display screen. If it is judged not to be the cursor K up move operation (S97 : No), the process advances to S99.

At S99, the remaining operation is the cursor K down move operation, as shown in FIG. 29, the cursor K is moved to the lower line while maintaining the layout position of the cursor K and the character immediately before the change of the display screen, and on this line, the layout position of the cursor K is set to the position one character leftward from the right end of the LCD 22, and thereby the process advances to S67 in FIG. 9 of the first embodiment.

As explained herein, in the document processing apparatus 1 of the second embodiment, the result of the averaging operation of the keyboard 3 is classified as any one of the editing operations including the character input operation by the character key 3A, the forward delete operation by the delete key 3L, the backward delete operation by the backspace key 3M, the cursor K left move operation by the cursor left move key 3E, the cursor K right move operation by the cursor right move key 3F, the cursor K up move operation by the cursor up move key 3C, and the cursor K down move operation by the cursor down move key 3D, and by locating the cursor K at the position suited to the editing operation on the display screen of the liquid crystal display 22, the user can operate the document processing apparatus 1 comfortably even if the characters to be displayed is small in number. As a result, the workload can be alleviated for the user.

While the presently preferred embodiment has been shown and described, it is to be understood that this disclosure is for the purpose of illustration and that various changes and modifications may be made without departing from the scope of the invention as set forth in the appended claims.

## Claims

1. A document processing apparatus (1) comprising:
an input device (3) that is used for inputting character data and various kinds of command data;
a display unit (22) that has a display screen to display the character data on the display screen;
a size setting device (52, 53, 55, 60, 23, 22, 3G, 3H) that sets a magnified and reduced display size of the character data shown in the display unit (22);
a range specifying device (3, 52, 55, 60, 23, 22) that specifics a display range of the character data;
a cursor (K) that indicates an input position at which one of the character data and the command data is inputted with the input device (3) on the display screen of the display unit (22);
a history storing device (3, 52, 55, 60, 66) that stores an input history of the character data and the command data being inputted with the input device (3); and
an analyzing device (52, 55, 60, 66) that analyzes the input history of the character data and the command data being inputted to the history storing device (3, 52, 55, 60, 66); **characterised in that**
the analyzing device (52,53,55,60,23,22) analyzes the input history by calculating the input frequency for each command in the input history and determining which command has the highest frequency
and **in that** the document processing apparatus (1) comprises a display control device (52, 53, 55, 60, 23, 22) that display the cursor (K) at a specified position that is determined based on the command having the highest frequency of the analytical results of the input history of the data being analyzed in the analyzing device (52, 55, 60, 66), the input history of the data being inputted to the history storing device (3, 52, 55, 60, 66), when a change of the display screen of the display unit (22) is performed by the size setting device (52, 53, 55, 60, 23, 22, 3G, 3H), and further displays character data within a display range that is changed by the range specifying device (3, 52, 55, 60, 23, 22) in consequence of displaying the cursor (K) at the specified position.

2. The document processing apparatus (1) according to claim 1,
wherein the character data displayed in the display unit (22) by the range specifying device (3, 52, 55, 60, 23, 22) is composed of at least three characters when the character data displayed in the display unit (22) by the size setting device (52, 53, 55, 60, 23, 22, 3G, 3H) is a magnified display.

3. The document processing apparatus (1) according to claims 1 and 2,
wherein: the analyzing device (52, 55, 60, 66) calculates an input frequency by weighting on each of the data being inputted to the history storing device (3, 52, 55, 60, 66) in an order of inputting of the data inputted most immediately before the change of the display screen of the display unit (22).

4. The document processing apparatus (1) according to claims 1 to 3,
wherein the analyzing device (52, 55, 60, 66) calculates values of the input frequency of the character data and the command data, and judges that an editing operation with a maximum value among the calculated values is the editing operation done immediately before the change of the display screen of the display unit (22).

5. The document processing apparatus (1) according to claims 1 to 4,
wherein the analyzing device (52, 55, 60, 66) calculates the input frequency of the character data and the command data according to classification of editing operations including a character input operation, a character forward delete operation, a character backward delete operation, a left move operation of the cursor (K), a right move operation of the cursor (K), an up move operation of the cursor (K), and a down move operation of the cursor (K).

6. The document processing apparatus (1) according to claims 1 to 5,
wherein the analyzing device (52, 55, 60, 66) calculates the input frequency of the character data and the command data, and when the character input operation is judged to be the editing operation done immediately before the change of the display screen of the display unit (22), the cursor (K) is set to a position one character leftward from a right end of the display unit (22) while maintaining a layout of the cursor (K) and the characters immediately before the change of the display screen of the display unit (22).

7. The document processing apparatus (1) according to claims 1 to 5,
wherein the analyzing device (52, 55, 60, 66) calculates the input frequency of the character data and the command data, and when the character forward delete operation is judged to be the editing operation done immediately before the change of the display screen of the display unit (22), the cursor (K) is set to a position one character rightward from a left end of the display unit (22) while maintaining a layout of the cursor (K) and the characters immediately before the change of the display screen of the display unit (22).

8. The document processing apparatus (1) according to claims 1 to 5,
wherein the analyzing device (52, 55, 60, 66) calculates the input frequency of the character data and the command data, and when the character backward delete operation is judged to be the editing operation done immediately before the change of the display screen of the display unit (22), the cursor (K) is set to a position one character leftward from a right end of the display unit (22) while maintaining a layout of the cursor (K) and the characters immediately before the change of the display screen of the display unit (22).

9. The document processing apparatus (1) according to claims 1 to 5,
wherein the analyzing device (52, 55, 60, 66) calculates the input frequency of the character data and the command data, and when the left move operation of the cursor (K) is judged to be the editing operation done immediately before the change of the display screen of the display unit (22), the cursor (K) is set to a position one character leftward from a right end of the display unit (22) while maintaining a layout of the cursor (K) and the characters immediately before the change of the display screen of the display unit (22).

10. The document processing apparatus (1) according to claims 1 to 5,
wherein the analyzing device (52, 55, 60, 66) calculates the input frequency of the character data and the command data, and when the right move operation of the cursor (K) is judged to be the editing operation done immediately before the change of the display screen of the display unit (22), the cursor (K) is set to a position one character rightward from a left end of the display unit (22) while maintaining a layout of the cursor (K) and the characters immediately before the change of the display screen of the display unit (22).

11. The document processing apparatus (1) according to claims 1 and 3 to 5,
wherein the analyzing device (52, 55, 60, 66) calculates the input frequency of the character data and the command data, and when the up move operation of the cursor (K) is judged to be the editing operation done immediately before the change of the display screen of the display unit (22), the cursor (K) is set to a position one character rightward from a position in the middle of the display unit (22) while maintaining a layout of the cursor (K) and characters immediately before the change of the display screen of the display unit (22).

12. The document processing apparatus (1) according to claims 1 and 3 to 5,
wherein the analyzing device (52, 55, 60, 66) calculates the input frequency of the character data and the command data, and when the down move operation of the cursor (K) is judged to be the editing operation done immediately before the change of the display screen of the display unit (22), the cursor (K) is set to a position one character rightward from a position in the middle of the display unit (22) while maintaining a layout of the cursor (K) and characters immediately before the change of the display screen of the display unit (22).

13. The document processing apparatus (1) according to claim 2,
wherein the analyzing device (52, 55, 60, 66) calculates an input frequency of the character data and the command data, and when an up move operation of the cursor (K) is judged to be an editing operation done immediately before the change of the display screen of the display unit (22), the cursor (K) is set to a position one character leftward from a right end of the display unit (22) while maintaining a layout of the cursor (K) and the characters immediately before the change of the display screen of the display unit (22).

14. The document processing apparatus (1) according to claim 2,
wherein the analyzing device (52, 55, 60, 66) calculates an input frequency of the character data and the command data, and when a down move operation of the cursor (K) is judged to be an editing operation done immediately before the change of the display screen of the display unit (22), the cursor (K) is set to a position one character leftward from a right end of the display unit (22) while maintaining a layout of the cursor (K) and the characters immediately before the change of the display screen of the display unit (22).

15. The document processing apparatus (1) according to claims 1 to 14,
wherein an oldest one of the character data and the command data in the input history is deleted when the input history of the character data and the command data stored in the history storing device (3, 52, 55, 60, 66) exceeds a specified number.

## Patentansprüche

1. Dokumentenverarbeitungsgerät (1), das aufweist:
eine Eingabevorrichtung (3), die dazu verwendet wird, Zeichendaten und verschiedene Arten von Befehlsdaten einzugeben;
eine Anzeigeeinheit (22), die einen Anzeigeschirm hat, um die Zeichendaten auf dem Anzeigeschirm anzuzeigen;
eine Größeneinstellungsvorrichtung (52, 53, 55, 60, 23, 22, 3G, 3H), die eine vergrößerte und verkleinerte Anzeigegröße der Zeichendaten, die in der Anzeigeeinheit (22) angezeigt werden, einstellt;
eine Bereichspezifizierungsvorrichtung (3, 52, 55, 60, 23, 22), die einen Anzeigebereich der Zeichendaten spezifiziert;
einen Cursor (K), der eine Eingabeposition, an der eines aus den Zeichendaten und den Befehlsdaten mit der Eingabevorrichtung (3) eingegeben wird, auf dem Anzeigeschirm der Anzeigeeinheit (22) anzeigt;
eine Verlaufsspeichervorrichtung (3, 52, 55, 60, 66), die einen Eingabeverlauf der Zeichendaten und der Befehlsdaten, die mit der Eingabevorrichtung (3) eingegeben wurden, speichert; und
eine Analysevorrichtung (52, 55, 60, 66), die den Eingabeverlauf der Zeichendaten und Befehlsdaten, die in die Verlaufsspeichervorrichtung (3, 52, 55, 60, 66) eingegeben wurden, speichert; **dadurch gekennzeichnet, daß**
die Analysevorrichtung (52, 53, 55, 60, 23, 22) den Eingabeverlauf durch Berechnen der Eingabehäufigkeit für jeden Befehl in dem Eingabeverlauf und Bestimmen, welcher Befehl die höchste Häufigkeit aufweist, analysiert
und dadurch, daß das Dokumentenverarbeitungsgerät (1) eine Anzeigesteuervorrichtung (52, 53, 55, 60, 23, 22) aufweist, die den Cursor (K) an einer spezifizierten Position anzeigt, die basierend auf dem Befehl mit größter Häufigkeit der analytischen Ergebnisse des Eingabeverlaufs der Daten, die in der Analysevorrichtung (52, 55, 60, 66) analysiert wurden, bestimmt wurde, wobei der Eingabeverlauf der Daten in die Verlaufsspeichervorrichtung (3, 52, 55, 60, 66) eingegeben wurden, wenn ein Wechsel des Anzeigeschirms der Anzeigeeinheit (22) durch die Größeneinstellungsvorrichtung (52, 53, 55, 60, 23, 22, 3G, 3H) durchgeführt wird, und die ferner Zeichendaten innerhalb eines Anzeigebereichs anzeigt, der durch die Bereichsspezifizierungsvorrichtung (3, 52, 55, 60, 23, 22) als Folge des Anzeigens des Cursors (K) an der spezifizierten Position geändert wurde.

2. Das Dokumentenverarbeitungsgerät (1) gemäß Anspruch 1,
wobei die Zeichendaten, die in der Anzeigeeinheit (22) durch die Bereichsspezifizierungsvorrichtung (3, 52, 55, 60, 23, 22) angezeigt werden, aus mindestens drei Zeichen zusammengesetzt sind, wenn die Zeichendaten, die in der Anzeigeeinheit (22) durch die Größeneinstellungsvorrichtung (52, 53, 55, 60, 23, 22, 3G, 3H) angezeigt werden, eine vergrößerte Anzeige sind.

3. Das Dokumentenverarbeitungsgerät (1) gemäß Anspruch 1 oder 2,
wobei die Analysevorrichtung (52, 55, 60, 66) eine Eingabehäufigkeit durch Gewichten eines jeden der Daten, die in die Verlaufsspeichervorrichtung (3, 52, 55, 60, 66) eingegeben wurden, in einer Reihenfolge der Eingabe der Daten, die am unmittelbarsten vor dem Wechsel des Anzeigeschirms der Anzeigeeinheit (22) eingegeben wurden, berechnet.

4. Das Dokumentenverarbeitungsgerät (1) gemäß einem der Ansprüche 1 bis 3,
wobei die Analysevorrichtung (52, 55, 60, 66) Werte der Eingabehäufigkeit der Zeichendaten und der Befehlsdaten berechnet, und beurteilt, daß eine Bearbeitungsoperation mit einem Maximalwert unter den berechneten Werten die Operation ist, die unmittelbar vor dem Wechsel des Anzeigeschirms der Anzeigeeinheit (22) vorgenommen wurde.

5. Das Dokumentenverarbeitungsgerät (1) gemäß einem der Ansprüche 1 bis 4,
wobei die Analysevorrichtung (52, 55, 60, 66) die Eingabehäufigkeit der Zeichendaten und der Befehlsdaten gemäß einer Klassifizierung der Bearbeitungsoperationen berechnet, die eine Zeicheneingabeoperation, eine Zeichenvorwärtslöschoperation, eine Zeichenrückwärtslöschoperation, eine Linksbewegungsoperation des Cursors (K), eine Rechtsbewegungsoperation des Cursors (K), eine Aufwärtsbewegungsoperation des Cursors (K) und eine Abwärtsbewegungsoperation des Cursors (K) beinhalten.

6. Das Dokumentenverarbeitungsgerät (1) gemäß einem der Ansprüche 1 bis 5,
wobei die Analysevorrichtung (52, 55, 60, 66) die Eingabehäufigkeit der Zeichendaten und der Befehlsdaten berechnet, und wenn die Zeicheneingabeoperation beurteilt wurde, die Bearbeitungsoperation zu sein, die unmittelbar vor dem Wechsel des Anzeigeschirms der Anzeigeeinheit (22) vorgenommen wurde, der Cursor an eine Position auf ein Zeichen links von einem rechten Ende der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

7. Das Dokumentenverarbeitungsgerät (1) gemäß einem der Ansprüche 1 bis 5,
wobei die Analysevorrichtung (52, 55, 60, 66) die Eingabehäufigkeit der Zeichendaten und der Befehlsdaten berechnet, und wenn die Zeichenvorwärtslöschoperation beurteilt wird, die Eingabeoperation zu sein, die unmittelbar vor dem Wechsel des Anzeigeschirms der Anzeigeeinheit (22) vorgenommen wurde, der Cursor (K) an eine Position ein Zeichen rechts von einem linken Ende der Anzeigeeinheit (22) gesetzt wird, während ein Layout des Cursors (K) und der Zeichen unmittelbar vor dem Wechsel des Anzeigeschirms der Anzeigeeinheit (22) beibehalten wird.

8. Das Dokumentenverarbeitungsgerät (1) gemäß einem der Ansprüche 1 bis 5,
wobei die Analysevorrichtung (52, 55, 60, 66) die Eingabehäufigkeit der Zeichendaten und der Befehlsdaten berechnet, und wenn die Zeichenrückwärtslöschoperation beurteilt wird, die Bearbeitungsoperation zu sein, die unmittelbar vor dem Wechsel des Anzeigeschirms der Anzeigeeinheit (22) vorgenommen wurde, der Cursor (K) an eine Position ein Zeichen links von einem rechten Ende der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

9. Das Dokumentenverarbeitungsgerät (1) gemäß einem der Ansprüche 1 bis 5,
wobei die Analysevorrichtung (52, 55, 60, 66) die Eingabehäufigkeit der Zeichendaten und der Befehlsdaten berechnet, und wenn eine Linksbewegungsoperation des Cursors (K) beurteilt wird, die Bearbeitungsoperation zu sein, die unmittelbar vor dem Wechsel des Anzeigeschirms der Anzeigeeinheit (22) vorgenommen wurde, der Cursor (K) an eine Position ein Zeichen links von einem rechten Ende der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

10. Das Dokumentenverarbeitungsgerät (1) gemäß einem der Ansprüche 1 bis 5,
wobei die Analysevorrichtung (52, 55, 60, 66) die Eingabehäufigkeit der Zeichendaten und der Befehlsdaten berechnet, und wenn die Rechtsbewegungsoperation des Cursors (K) beurteilt wird, die Bearbeitungsoperation zu sein, die unmittelbar vor dem Wechsel des Anzeigeschirms der Anzeigeeinheit (22) vorgenommen wurde, der Cursor (K) an eine Position ein Zeichen rechts von einem linken Ende der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

11. Das Dokumentenverarbeitungsgerät (1) gemäß einem der Ansprüche 1 und 3 bis 5,
wobei die Analysevorrichtung (52, 55, 60, 66) die Eingabehäufigkeit der Zeichendaten und der Befehlsdaten berechnet, und wenn die Aufwärtsbewegungsoperation des Cursors (K) beurteilt wird, die Bearbeitungsoperation zu sein, die unmittelbar vor dem Wechsel das Anzeigeschirms der Anzeigeeinheit (22) vorgenommen wurde, der Cursor (K) an eine Position ein Zeichen rechts von einer Position in der Mitte der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

12. Das Dokumentenverarbeitungsgerät (1) gemäß einem der Ansprüche 1 und 3 bis 5,
wobei die Analysevorrichtung (52, 55, 60, 66) die Eingabehäufigkeit der Zeichendaten und der Befehlsdaten berechnet, und wenn die Abwärtsbewegungsoperation des Cursors (K) beurteilt wird, die Bearbeitungsoperation zu sein, die unmittelbar vor dem Wechsel des Anzeigeschirms der Anzeigeeinheit (22) vorgenommen wurde, der Cursor (K) an eine Position ein Zeichen rechts von einer Position in der Mitte der Anzeigeeinheit (22) gesetzt wird, während ein Layout des Cursors (K) und der Zeichen beibehalten wird, unmittelbar vor dem Wechsel das Anzeigeschirm der Anzeigeeinheit (22).

13. Das Dokumentenverarbeitungsgerät (1) gemäß Anspruch 2,
wobei die Analysevorrichtung (52, 55, 60, 66) eine Eingabehäufigkeit der Zeichendaten und der Befehlsdaten berechnet, und wenn eine Aufwärtsbewegungsoperation des Cursors (K) beurteilt wird, die Bearbeitungsoperation zu sein, die unmittelbar vor dem Wechsel des Anzeigeschirms der Anzeigeeinheit (22) vorgenommen wurde, der Cursor (K) an eine Position ein Zeichen links von einem rechten Ende der Anzeigeeinheit (22) gesetzt wird, während ein Layout des Cursors (K) und der Zeichen beibehalten wird, unmittelbar vor dem Wechsel das Anzeigeschirms der Anzeigeeinheit (22).

14. Das Dokumentenverarbeitungsgerät (1) gemäß Anspruch 2,
wobei die Analysevorrichtung (52, 55, 60, 66) eine Eingabehäufigkeit der Zeichendaten und der Befehlsdaten berechnet, und wenn eine Abwärtsbewegungsoperation des Cursors (K) beurteilt wird, die Bearbeitungsoperation zu sein, die unmittelbar vor dem Wechsel des Anzeigeschirms der Anzeigeeinheit (22) vorgenommen wurde, der Cursor (K) an eine Position links von einem rechten Ende der Anzeigeeinheit (22) gesetzt wird, während ein Layout des Cursors (K) und der Zeichen beibehalten wird, unmittelbar vor dem Wechsel des Anzeigeschirms der Anzeigeeinheit (22).

15. Das Dokumentenverarbeitungsgerät (1) gemäß einem der Ansprüche 1 bis 14,
wobei ein ältestes der Zeichendaten und der Befehlsdaten in dem Eingabeverlauf gelöscht wird, wenn der Eingabeverlauf der Zeichendaten und der Befehlsdaten, die in der Verlaufsspeichereinheit (3, 52, 55, 60, 66) gespeichert sind, eine vorbestimmte Anzahl übersteigt.

## Revendications

1. Dispositif de traitement de document (1) comprenant :
un dispositif d'entrée (3) qui est utilisé pour entrer des données de caractères et divers types de données de commande ;
une unité d'affichage (22) qui comporte un écran d'affichage pour afficher les données de caractères sur l'écran d'affichage ;
un dispositif de détermination de taille (52, 53, 55, 60, 23, 22, 3G, 3H) qui détermine une taille d'affichage agrandie et réduite des données de caractères présentées sur l'unité d'affichage (22) ;
un dispositif de spécification de plage (3, 52, 55, 60, 23, 22) qui spécifie une plage d'affichage des données de caractères ;
un curseur (K) qui indique une position d'entrée à laquelle l'une des données de caractères et des données de commande est entrée par le dispositif d'entrée (3) sur l'écran d'affichage de l'unité d'affichage (22) ;
un dispositif de mémorisation d'historique (3, 52, 55, 60, 66) qui mémorise un historique des entrées des données de caractères et des données de commande entrées par le dispositif d'entrée (3) ; et
un dispositif d'analyse (52, 55, 60, 66) qui analyse l'historique des entrées des données de caractères et des données de commande entré dans le dispositif de mémorisation d'historique (3, 52, 55, 60, 66) ; **caractérisé en ce que**
le dispositif d'analyse (52, 53, 55, 60, 23, 22) analyse l'historique des entrées en calculant la fréquence d'entrée pour chaque commande dans l'historique des entrées et en déterminant la commande qui a la fréquence la plus élevée ;
et **en ce que** le dispositif de traitement de document (1) comprend un dispositif de commande d'affichage (52, 53, 55, 60, 23, 22) qui affiche le curseur (K) à une position spécifiée qui est déterminée sur la base de la commande ayant la fréquence la plus élevée des résultats analytiques de l'historique des entrées des données analysées dans le dispositif d'analyse (52, 55, 60, 66), l'historique des entrées des données étant entré dans le dispositif de mémorisation d'historique (3, 52, 55, 60, 66), lorsqu'une modification de l'écran d'affichage de l'unité d'affichage (22) est effectuée par le dispositif de détermination de taille (52, 53, 55, 60, 23, 22, 3G, 3H), et affiche en outre les données de caractères dans une plage d'affichage qui est modifiée par le dispositif de spécification de plage (3, 52, 55, 60, 23, 22) en conséquence de l'affichage du curseur (K) à la position spécifiée.

2. Dispositif de traitement de document (1) selon la revendication 1,
dans lequel les données de caractères affichées sur l'unité d'affichage (22) par le dispositif de spécification de plage (3, 52, 55, 60, 23, 22) sont composées d'au moins trois caractères lorsque les données de caractères affichées dans l'unité d'affichage (22) par le dispositif de détermination de taille (52, 53, 55, 60, 23, 22, 3G, 3H) sont un affichage agrandi.

3. Dispositif de traitement de document (1) selon les revendications 1 et 2,
dans lequel le dispositif d'analyse (52, 55, 60, 66) calcule une fréquence d'entrée en pondérant chacune des données entrées dans le dispositif de mémorisation d'historique (3, 52, 55, 60, 66) dans un ordre d'entrée des données entrées le plus immédiatement avant la modification de l'écran d'affichage de l'unité d'affichage (22).

4. Dispositif de traitement de document (1) selon les revendications 1 à 3,
dans lequel le dispositif d'analyse (52, 55, 60, 66) calcule les valeurs de la fréquence d'entrée des données de caractères et des données de commande, et juge qu'une opération d'édition avec une valeur maximum parmi les valeurs calculées est l'opération d'édition effectuée immédiatement avant la modification de l'écran d'affichage de l'unité d'affichage (22).

5. Dispositif de traitement de document (1) selon les revendications 1 à 4,
dans lequel le dispositif d'analyse (52, 55, 60, 66) calcule la fréquence d'entrée des données de caractères et des données de commande conformément au classement des opérations d'édition comprenant une opération d'entrée de caractère, une opération d'effacement de caractère en avant, une opération d'effacement de caractère en arrière, une opération de déplacement vers la gauche du curseur (K), une opération de déplacement vers la droite du curseur (K), une opération de déplacement vers le haut du curseur (K), et une opération de déplacement vers le bas du curseur (K).

6. Dispositif de traitement de document (1) selon les revendications 1 à 5,
dans lequel le dispositif d'analyse (52, 55, 60, 66) calcule la fréquence d'entrée des données de caractères et des données de commande, et lorsqu'il est jugé que l'opération d'entrée de caractère est l'opération d'édition effectuée immédiatement avant la modification de l'écran d'affichage de l'unité d'affichage (22), le curseur (K) est positionné à une position un caractère vers la gauche par rapport à une extrémité droite de l'unité d'affichage (22) tout en maintenant un agencement du curseur (K) et des caractères immédiatement avant la modification de l'écran d'affichage de l'unité d'affichage (22).

7. Dispositif de traitement de document (1) selon les revendications 1 à 5,
dans lequel le dispositif d'analyse (52, 55, 60, 66) calcule la fréquence d'entrée des données de caractères et des données de commande, et lorsqu'il est jugé que l'opération d'effacement de caractère en avant est l'opération d'édition effectuée immédiatement avant la modification de l'écran d'affichage de l'unité d'affichage (22), le curseur (K) est positionné à une position un caractère vers la droite par rapport à une extrémité gauche de l'unité d'affichage (22), tout en maintenant un agencement du curseur (K) et des caractères immédiatement avant la modification de l'écran d'affichage de l'unité d'affichage (22).

8. Dispositif de traitement de document (1) selon les revendications 1 à 5,
dans lequel le dispositif d'analyse (52, 55, 60, 66) calcule la fréquence d'entrée des données de caractères et des données de commande, et lorsqu'il est jugé que l'opération d'effacement de caractère en arrière est l'opération d'édition effectuée immédiatement avant la modification de l'écran d'affichage de l'unité d'affichage (22), le curseur (K) est placé à une position un caractère vers la gauche par rapport à une extrémité droite de l'unité d'affichage (22) tout en maintenant un agencement du curseur (K) et des caractères immédiatement avant la modification de l'écran d'affichage de l'unité d'affichage (22).

9. Dispositif de traitement de document (1) selon les revendications 1 à 5,
dans lequel le dispositif d'analyse (52, 55, 60, 66) calcule la fréquence d'entrée des données de caractères et des données de commande, et lorsqu'il est jugé que l'opération de déplacement vers la gauche du curseur (K) est l'opération d'édition effectuée immédiatement avant la modification de l'écran d'affichage de l'unité d'affichage (22), le curseur (K) est placé à une position un caractère vers la gauche par rapport à une extrémité droite de l'unité d'affichage (22) tout en maintenant l'agencement du curseur (K) et des caractères immédiatement avant la modification de l'écran d'affichage de l'unité d'affichage (22).

10. Dispositif de traitement de document (1) selon les revendications 1 à 5,
dans lequel le dispositif d'analyse (52, 55, 60, 66) calcule la fréquence d'entrée des données de caractères et des données de commande, et lorsqu'il est jugé que l'opération de déplacement vers la droite du curseur (K) est l'opération d'édition effectuée immédiatement avant la modification de l'écran d'affichage de l'unité d'affichage (22), le curseur (K) est placé à une position un caractère vers la droite par rapport à une extrémité gauche de l'unité d'affichage (22) tout en maintenant un agencement du curseur (K) et des caractères immédiatement avant la modification de l'écran d'affichage de l'unité d'affichage (22).

11. Dispositif de traitement de document (1) selon les revendications 1 et 3 à 5,
dans lequel le dispositif d'analyse (52, 55, 60, 66) calcule la fréquence d'entrée des données de caractères et des données de commande, et lorsqu'il est jugé que l'opération de déplacement vers le haut du curseur (K) est l'opération d'édition effectuée immédiatement avant la modification de l'écran d'affichage de l'unité d'affichage (22), le curseur (K) est placé à une position un caractère vers la droite par rapport à une position au centre de l'unité d'affichage (22) tout en maintenant un agencement du curseur (K) et des caractères immédiatement avant la modification de l'écran d'affichage de l'unité d'affichage (22).

12. Dispositif de traitement de document (1) selon les revendications 1 et 3 à 5,
dans lequel le dispositif d'analyse (52, 55, 60, 66) calcule la fréquence d'entrée des données de caractères et des données de commande, et lorsqu'il est jugé que l'opération de déplacement vers le bas du curseur (K) est l'opération d'édition effectuée immédiatement avant la modification de l'écran d'affichage de l'unité d'affichage (22), le curseur (K) est placé à une position un caractère vers la droite par rapport à une position au centre de l'unité d'affichage (22) tout en maintenant un agencement du curseur (K) et des caractères immédiatement avant la modification de l'écran d'affichage de l'unité d'affichage (22).

13. Dispositif de traitement de document (1) selon la revendication 2,
dans lequel le dispositif d'analyse (52, 55, 60, 66) calcule une fréquence d'entrée des données de caractères et des données de commande, et lorsqu'il est jugé qu'une opération de déplacement vers le haut du curseur (K) est une opération d'édition effectuée immédiatement avant la modification de l'écran d'affichage de l'unité d'affichage (22), le curseur (K) est placé à une position un caractère vers la gauche par rapport à une extrémité droite de l'unité d'affichage (22), tout en maintenant un agencement du curseur (K) et des caractères immédiatement avant la modification de l'écran d'affichage de l'unité d'affichage (22).

14. Dispositif de traitement de document (1) selon la revendication 2,
dans lequel le dispositif d'analyse (52, 55, 60, 66) calcule une fréquence d'entrée des données de caractères et des données de commande, et lorsqu'il est jugé qu'une opération de déplacement vers le bas du curseur (K) est une opération d'édition effectuée immédiatement avant la modification de l'écran d'affichage de l'unité d'affichage (22), le curseur (K) est placé à une position un caractère vers la gauche par rapport à une extrémité droite de l'unité d'affichage (22) tout en maintenant un agencement du curseur (K) et des caractères immédiatement avant la modification de l'écran d'affichage de l'unité d'affichage (22).

15. Dispositif de traitement de document (1) selon les revendications 1 à 14,
dans lequel une plus ancienne des données de caractères et des données de commande dans l'historique des entrées est supprimée lorsque l'historique des entrées des données de caractères et des données de commande mémorisé dans le dispositif de mémorisation d'historique (3, 52, 55, 60, 66) dépasse un nombre spécifié.
